# EUROPÄISCHE PATENTSCHRIFT

(11) **EP 3 571 104 B1**
(45) Veröffentlichungstag und Bekanntmachung des Hinweises auf die Patenterteilung: **10.08.2022**
(21) Anmeldenummer: 18702155.5
(22) Anmeldetag: 19.01.2018
(51) Int. Cl.: B60T 8/40

(54) **HYDRAULISCHE KRAFTFAHRZEUG-BREMSANLAGE UND VERFAHREN ZUM BETREIBEN UND ZUM PRÜFEN DERSELBEN**
HYDRAULIC BRAKE SYSTEM FOR A MOTOR VEHICLE AND METHOD FOR OPERATING AND TESTING SAME
SYSTÈME DE FREINAGE HYDRAULIQUE DE VÉHICULE AUTOMOBILE ET PROCÉDÉ POUR FAIRE FONCTIONNER ET CONTRÔLER CELUI-CI

(30) Priorität: 19.01.2017 DE 102017000472
(43) Veröffentlichungstag der Anmeldung: 27.11.2019
(73) Patentinhaber: ZF Active Safety GmbH, 56070 Koblenz (DE)
(72) Erfinder: PLEWNIA, Heinrich, 56316 Niederhofen (DE); ALFORD, Nicholas, 56323 Waldesch (DE)
(74) Vertreter: ZF Friedrichshafen AG
(86) Internationale Anmeldenummer: PCT/EP2018/051261
(87) Internationale Veröffentlichungsnummer: WO 2018/134333

(56) Entgegenhaltungen:
- EP-A2- 0 736 431
- WO-A1-2015/106892
- WO-A1-2016/012331
- WO-A1-2016/096533
- WO-A2-2012/017037
- DE-A1-102016 201 261

## Beschreibung

### Technisches Gebiet

Die vorliegende Erfindung betrifft allgemein das Gebiet der Kraftfahrzeug-Bremsanlagen. Konkret werden eine hydraulische Kraftfahrzeug-Bremsanlage und Verfahren zum Betreiben und zum Prüfen derselben beschrieben.

### Hintergrund

Herkömmliche elektrohydraulische Kraftfahrzeug-Bremsanlagen nach dem Brake-By-Wire- (BBW-) Prinzip umfassen einen elektrischen Bremsdruckerzeuger, der im Normalbremsbetrieb den Bremsdruck an den Radbremsen des Kraftfahrzeugs erzeugt. Eine vom Fahrer an einem Bremspedal angeforderte Fahrzeugverzögerung wird hierbei sensorisch erfasst und in ein Ansteuersignal für den elektrischen Bremsdruckerzeuger umgewandelt.

Um auch bei Ausfall des elektrischen Bremsdruckerzeugers noch einen Bremsdruck an den Radbremsen aufbauen zu können, umfassen Bremsanlagen nach dem BBW-Prinzip in der Regel zusätzlich einen Hauptzylinder, über den ebenfalls Hydraulikfluid zu den Radbremsen gefördert werden kann. Im Normalbremsbetrieb ist das Bremspedal vom Hauptzylinder entkoppelt, wobei ein Bremsdruck an den Radbremsen ausschließlich mittels des elektrischen Bremsdruckerzeugers aufgebaut wird. Im Notbremsbetrieb hingegen, also beispielsweise bei Ausfall des elektrischen Bremsdruckerzeugers, wird die Entkoppelung von Bremspedal und Hauptzylinder aufgehoben. In diesem Fall kann dann der Fahrer selbst mittels des dann auf den Hauptzylinder einwirkenden Bremspedals einen Bremsdruck an den Radbremsen erzeugen.

Der Notbremsbetrieb wird aufgrund der aufgehobenen Entkopplung von Bremspedal und Hauptzylinder auch als Push-Through- (PT-) Betrieb bezeichnet. Die dem Fahrer eingeräumte Möglichkeit, über den Hauptzylinder im PT-Betrieb einen Bremsdruck an den Radbremsen aufbauen zu können, schafft eine aus Sicherheitsüberlegungen unabdingbare Redundanz.

Auch Kraftfahrzeug-Bremsanlagen für autonomes oder teilautonomes Fahren müssen redundant ausgelegt sein. Allerdings kann in solchen Fällen nicht davon ausgegangen werden, dass sich der Fahrer im Fahrzeug befindet (z. B. in einem Remote Controlled Parking-, RCP-, Betrieb) oder dass der Fahrer unverzüglich ein Bremspedal für den PT-Betrieb betätigen kann (z. B. bei vom Fahrgeschehen abgewandtem Blick).

Aus diesem Grund wird gefordert, dass Bremsanlagen für autonomes oder teilautonomes Fahren neben einer Funktionseinheit, die eine elektrisch ansteuerbare Hauptbremsfunktion bereitstellt, noch eine weitere Funktionseinheit umfassen, die in redundanter Weise eine elektrisch ansteuerbare Hilfsbremsfunktion implementiert.

Aus WO 2016/096533 A1 ist eine hydraulische Fahrzeugbremsanlage mit mehreren Radbremsen bekannt, die eine erste elektrohydraulische Steuer- und Regeleinheit mit einer ersten elektrisch steuerbaren Druckbereitstellungseinrichtung und eine zweite elektrohydraulische Steuer- und Regeleinheit mit einer zweiten elektrisch steuerbaren Druckbereitstellungseinrichtung umfasst. Die Steuer- und Regeleinheiten sind jeweils mit einem Druckmittelvorratsbehälter versehen. Die erste Steuer- und Regeleinheit ist dazu eingerichtet, elektrisch betätigbare Einlassventile für jede Radbremse anzusteuern. Redundanz wird dadurch erzielt, dass die zweite Steuer- und Regeleinheit ebenfalls zur Druckbeaufschlagung an zweien oder allen der Radbremsen eingerichtet ist.

Eine Fahrzeugbremsanlage mit zwei unabhängigen Steuer- und Regeleinheiten und zwei unabhängigen Druckerzeugern ist zudem aus WO 2016/012331 A1 bekannt.

Ferner offenbart WO 2015/106892 A1 eine Fahrzeugbremsanlage mit einer ersten Bremsensteuervorrichtung und mit einer zweiten Bremsensteuervorrichtung, wobei bei Ausfall der ersten Bremsensteuervorrichtung die zweite Bremsensteuervorrichtung eine radindividuelle Bremsdruckregelung übernimmt.

### Kurzer Abriss

Der vorliegenden Erfindung liegt die Aufgabe zugrunde, eine hydraulische Kraftfahrzeug-Bremsanlage mit verbessertem Aufbau anzugeben, die in redundanter Weise zwei elektrische Bremsdruckerzeuger umfasst.

Diese Aufgabe wird erfindungsgemäß durch die Gegenstände der unabhängigen Ansprüche gelöst. Weiterbildungen sind den abhängigen Ansprüchen zu entnehmen.

Gemäß einem ersten Aspekt wird eine hydraulische Kraftfahrzeug-Bremsanlage mit redundanter Bremsdruckregelung angegeben, wobei die Bremsanlage eine erste Funktionseinheit umfasst mit wenigstens einem ersten elektrischen Bremsdruckerzeuger, der ausgebildet ist, an einer Mehrzahl von Radbremsen jeweils einen Bremsdruck zu erzeugen, und mit einer ersten Ventilanordnung pro Radbremse, wobei die erste Ventilanordnung für eine Bremsdruckregelung an der entsprechenden Radbremse ansteuerbar ist, um eine der ersten Ventilanordnung zugeordnete Radbremse wahlweise mit dem ersten Bremsdruckerzeuger oder einem ersten drucklosen Reservoir für Hydraulikfluid zu koppeln. Die Kraftfahrzeug-Bremsanlage umfasst ferner eine zweite Funktionseinheit mit wenigstens einem zweiten elektrischen Bremsdruckerzeuger, der ausgebildet ist, an einer Untermenge der Radbremsen jeweils einen Bremsdruck zu erzeugen, wobei ein Ausgang des zweiten Bremsdruckerzeugers aus Sicht des ersten Bremsdruckerzeugers stromabwärts der der entsprechenden Radbremse zugeordneten ersten Ventilanordnung angeordnet ist. Die zweite Funktionseinheit ist ausgelegt, in redundanter Weise zur ersten Funktionseinheit eine Bremsdruckregelung an jeder Radbremse der Untermenge durchzuführen.

Der Ausgang des zweiten Bremsdruckerzeugers kann derart angeordnet sein, dass der zweite Bremsdruckerzeuger zusätzlich oder alternativ zum ersten Bremsdruckerzeuger an der Untermenge der Radbremsen einen Bremsdruck zu erzeugen vermag.

Insbesondere kann der zweite Bremsdruckerzeuger die Bremsdruckerzeugung an der Untermenge der Radbremsen nach einem Ausfall des ersten Bremsdruckerzeugers übernehmen. Das hierfür erforderliche Hydraulikfluid kann der zweite Bremsdruckerzeuger aus einem nur der zweiten Funktionseinheit lokal zur Verfügung stehenden Hydraulikfluidspeicher entnehmen oder aus einem auch der ersten Funktionseinheit zur Verfügung stehenden zentralen Speicher.

Die zweite Funktionseinheit kann insbesondere ausgelegt sein, eine, mehrere oder alle Bremsdruckregelfunktionen, welche die erste Funktionseinheit durchzuführen vermag, in redundanter Weise durchzuführen. Diese mittels der zweiten Funktionseinheit geschaffene Redundanz kann beispielsweise im Fehlerfall der ersten Funktionseinheit aktiviert werden. Beispielhafte Bremsdruckregelfunktionen umfassen eine oder mehrere der folgenden Funktionen: Antiblockiersystem, Antriebsschlupfregelung, Fahrdynamikregelung und automatische Abstandsregelung.

Die Untermenge der Radbremsen, an welchen der zweite elektrische Bremsdruckerzeuger einen Bremsdruck zu erzeugen vermag, kann eine echte Teilmenge oder eine unechte Teilmenge der Mehrzahl von Radbremsen sein, an welchen der erste elektrische Bremsdruckerzeuger einen Bremsdruck zu erzeugen vermag. Im Fall einer unechten Teilmenge vermag der zweite elektrische Bremsdruckerzeuger an sämtlichen Radbremsen einen Bremsdruck zu erzeugen, an welchen auch der erste elektrische Bremsdruckerzeuger einen Bremsdruck zu erzeugen vermag.

Die beiden Funktionseinheiten können logisch und/oder physikalisch voneinander getrennt sein. Physikalisch voneinander getrennte Funktionseinheiten können zumindest im Umfang einiger ihrer Komponenten in unterschiedlichen Gehäusen oder Gehäuseteilen aufgenommen sein. Die unterschiedlichen Gehäuse oder Gehäuseteile können unmittelbar, also zumindest annähernd abstandslos, aneinander befestigt sein und somit als zwei Teilgehäuse eines übergeordneten Gesamtgehäuses betrachtet werden.

Gemäß einer ersten Variante ist sowohl ein Eingang des ersten Bremsdruckerzeugers als auch ein Eingang des zweiten Bremsdruckerzeugers mit dem ersten drucklosen Reservoir gekoppelt oder koppelbar. In diesem Fall können beide Bremsdruckerzeuger Hydraulikfluid aus dem ersten Reservoir ansaugen.

Gemäß einer weiteren Variante umfasst die zweite Funktionseinheit ein zweites druckloses Reservoir für Hydraulikfluid, wobei ein Eingang des zweiten Bremsdruckerzeugers mit dem zweiten drucklosen Reservoir gekoppelt oder koppelbar ist. Ein Eingang des ersten Bremsdruckerzeugers ist hingegen mit dem ersten drucklosen Reservoir gekoppelt oder koppelbar.

Die zweite Funktionseinheit kann für die Durchführung der Bremsdruckregelung ferner eine zweite Ventilanordnung pro Radbremse der Untermenge umfassen. Die zweite Ventilanordnung kann für die Bremsdruckregelung an der entsprechenden Radbremse ansteuerbar sein. Die entsprechende Ansteuerung kann insbesondere unmittelbar mit dem Aufbauen, dem Halten oder dem Abbauen eines Bremsdrucks an der entsprechenden Radbremse einhergehen.

Die zweite Ventilanordnung kann zwischen dem Ausgang des zweiten Bremsdruckerzeugers und dem zweiten drucklosen Reservoir vorgesehen sein. Gemäß diesem Ansatz kann die zweite Ventilanordnung im elektrisch nicht angesteuerten Zustand ihre Durchlassrichtung einnehmen und im angesteuerten Zustand zumindest in Richtung des zweiten drucklosen Reservoirs eine Sperrwirkung besitzen.

Die zweite Ventilanordnung kann eine erste Ventileinheit umfassen, um die der zweiten Ventilanordnung zugeordneten Radbremse zur Bremsdruckerhöhung wahlweise mit dem zweiten Druckerzeuger zu koppeln, und eine zweite Ventileinheit, um wahlweise Bremsdruck an der der zweiten Ventilanordnung zugeordneten Radbremse abzubauen. Der Bremsdruckabbau kann durch Ablassen von Hydraulikfluid in das erste drucklose Reservoir, das zweite drucklose Reservoir oder einen Fluiddruckspeicher erfolgen.

Die erste Ventileinheit kann in ihrem elektrisch nicht angesteuerten Zustand eine Durchlassstellung einnehmen. Die zweite Ventileinheit kann in ihrem elektrisch nicht angesteuerten Zustand zumindest in Richtung eines Fluidreservoirs (beispielsweise des ersten drucklosen Reservoirs oder eines Hydraulikdruckspeichers) eine Sperrwirkung aufweisen.

In einer Variante ist der zweite elektrische Bremsdruckerzeuger in einer Fluidleitung zwischen der einer Radbremse zugeordneten ersten Ventilanordnung und der entsprechenden Radbremse angeordnet. Insbesondere kann der zweite elektrische Bremsdruckerzeuger derart angeordnet sein, dass der Ausgang des zweiten elektrischen Bremsdruckerzeugers zur Radbremse hin gerichtet ist und ein oder der Eingang des zweiten elektrischen Bremsdruckerzeugers zur entsprechenden ersten Ventilanordnung hin gerichtet ist. In diesem Fall kann der zweite elektrische Bremsdruckerzeuger ausgebildet sein, Hydraulikfluid aus der oder über die erste Funktionseinheit anzusaugen.

Ferner kann die der entsprechenden Radbremse zugeordnete zweite Ventilanordnung eine parallel zum zweiten Bremsdruckerzeuger geschaltete erste Ventileinheit umfassen. Die erste Ventileinheit kann in ihrem elektrisch nicht angesteuerten Zustand ihre Durchlassstellung einnehmen. In ihrem elektrisch angesteuerten Zustand kann die zweite Ventilanordnung eine Sperrwirkung besitzen. Des Weiteren kann die der entsprechenden Radbremse zugeordnete zweite Ventilanordnung eine parallel zur ersten Ventileinheit geschaltete zweite Ventileinheit umfassen. Auch die zweite Ventileinheit kann in ihrem elektrisch nicht angesteuerten Zustand eine Durchlassstellung einnehmen und bei elektrischer Ansteuerung eine Sperrwirkung entfalten. Die erste, und falls vorhanden, die zweite Ventileinheit können ausgelegt sein, bei Betrieb des ersten Bremsdruckerzeugers eine Durchlassstellung einzunehmen. Bei Betrieb des zweiten Bremsdruckerzeugers können sie eine Sperrstellung zumindest entgegen einer Förderrichtung des zweiten Bremsdruckerzeugers einnehmen.

Die Radbremsen können Vorderradbremsen und Hinterradbremsen umfassen. In einer Variante sind die Vorderradbremsen an die zweite Funktionseinheit und die Hinterradbremsen an die erste Funktionseinheit angeschlossen. In einer anderen Variante sind alle Radbremsen an die zweite Funktionseinheit angeschlossen.

Allgemein kann die zweite Funktionseinheit wenigstens einen eingangsseitig des zweiten Bremsdruckerzeugers vorgesehenen Fluidspeicher umfassen. Der Fluidspeicher kann als Fluiddruckspeicher (z. B. als Membranspeicher oder als federbelasteter Kolbenspeicher) ausgebildet sein, um Hydraulikfluid druckbeaufschlagt zu speichern. Alternativ hierzu kann der Fluidspeicher ohne die Möglichkeit, Hydraulikfluid unter Druck zu setzen, ausgebildet sein.

Gemäß einer Variante ist für jede Vorderradbremse ein Fluidspeicher in der zweiten Funktionseinheit vorgesehen, und für die Hinterradbremsen ist in der zweiten Funktionseinheit kein Kolbenspeicher vorgesehen. Gemäß einer anderen Variante sind in der zweiten Funktionseinheit sowohl für die Vorderradbremsen als auch für die Hinterradbremsen Fluidspeicher vorgesehen. Pro Vorderradbremse und/oder pro Hinterradbremse kann genau ein Fluidspeicher vorgesehen sein.

Gemäß einer Variante ist der Fluidspeicher als Kolbenspeicher mit einem Zylinder und einem darin verschieblich aufgenommenen Kolben ausgebildet, wobei der Kolben eine Speicherstellung bei befülltem Zylinder aufweist. Wird Hydraulikfluid aus dem befüllten Zylinder entnommen, bewegt sich der Kolben aus seiner Speicherstellung heraus. Der Kolben kann mit Atmosphärendruck beaufschlagt sein.

Der Kolbenspeicher kann in einem Fluidpfad zwischen einer der Radbremsen der Untermenge und der ersten Funktionseinheit derart angeordnet sein, dass ein von der Radbremse in Richtung der ersten Funktionseinheit strömendes Hydraulikfluid den Kolben in seine Speicherstellung zu drängen vermag. So kann der entsprechende Fluidpfad durch den Zylinder des Kolbenspeichers hindurch verlaufen, wobei erst nach Verschieben des Kolbens in seine Speicherstellung eine Öffnung des Fluidpfads zur ersten Funktionseinheit hin erfolgt.

Es kann ein erstes Rückschlagventil zwischen dem Zylinder und der ersten Funktionseinheit vorgesehen sein, welches ein Strömen von Hydraulikfluid in die erste Funktionseinheit gestattet. In die entgegengesetzte Richtung wirkt das erste Rückschlagventil hingegen sperrend. Das erste Rückschlagventil kann federkraftbeaufschlagt sein. Ein Öffnungsdruck zum Öffnen des ersten Rückschlagventils kann weniger als 1 bar, insbesondere weniger als 0,5 bar betragen.

Die Kraftfahrzeug-Bremsanlage kann ein zweites Rückschlagventil umfassen, welches ein Ansaugen von Hydraulikfluid mittels des zweiten Bremsdruckerzeugers aus der oder über die erste Funktionseinheit gestattet. In die entgegengesetzte Richtung wirkt das zweite Rückschlagventil hingegen sperrend.

In einer Variante ist das zweite Rückschlagventil zwischen dem Zylinder und der ersten Funktionseinheit derart vorgesehen, dass ein Ansaugen von Hydraulikfluid mittels des zweiten Bremsdruckerzeugers aus der ersten Funktionseinheit und durch den Zylinder hindurch möglich ist. In diesem Fall können das erste Rückschlagventil und das zweite Rückschlagventil in zueinander versetzten, mit dem Zylinder kommunizierenden Leitungen angeordnet sein. Die dem ersten Rückschlagventil zugeordnete Leitung kann im Wesentlichen erst in der Speicherstellung des Kolbens bei gefülltem Zylinder freigegeben werden. Die dem zweiten Rückschlagventil zugeordnete Leitung kann im Wesentlichen unabhängig von der Stellung des Kolbens freigegeben sein.

Der Kolbenspeicher kann ohne elastisches Element zur selbsttätigen Überführung des Kolbens in seine Speicherstellung ausgebildet sein. Wie vorstehend erwähnt, kann in diesem Fall die Überführung des Kolbens in seine Speicherstellung mittels des von der Radbremse in den Zylinder in Richtung der ersten Funktionseinheit zurückfließenden Hydraulikfluids bewerkstelligt werden.

Die zweite Funktionseinheit kann ferner eine Trennkolbenanordnung umfassen. Die Trennkolbenanordnung kann zwischen dem Ausgang des zweiten Bremsdruckerzeugers und der entsprechenden Radbremse der Untermenge angeordnet sein. Mittels der Trennkolbenanordnung lassen sich in einer Variante zwei voneinander getrennte Hydrauliksysteme für die erste Funktionseinheit und die zweite Funktionseinheit definieren.

Die Trennkolbenanordnung kann ausgebildet sein, den ersten Bremsdruckerzeuger in dessen Betrieb fluidisch mit der entsprechenden Radbremse der Untermenge zu koppeln. Ferner kann die Trennkolbenanordnung ausgebildet sein, bei einem Betrieb des zweiten Bremsdruckerzeugers den ersten Bremsdruckerzeuger von der entsprechenden Radbremse fluidisch abzukoppeln.

Die erste Funktionseinheit kann ferner ein erstes Steuergerät umfassen zur Ansteuerung des ersten Bremsdruckerzeugers (und, als Option, einer oder mehrerer Ventileinheiten der ersten Ventilanordnung) bei einer Bremsdruckregelung der ersten Funktionseinheit. Entsprechend kann die zweite Funktionseinheit ein zweites Steuergerät umfassen, welches zur Ansteuerung des zweiten Bremsdruckerzeugers (und, als Option, einer oder mehrerer Ventileinheiten der zweiten Ventilanordnung) bei einer Bremsdruckregelung der zweiten Funktionseinheit ausgebildet ist. Als Alternative hierzu kann für die erste Funktionseinheit und die zweite Funktionseinheit ein gemeinsames Steuergerät vorgesehen werden.

Jede erste Ventilanordnung kann eine dritte Ventileinheit umfassen, um die der ersten Ventilanordnung zugeordnete Radbremse wahlweise mit dem ersten Bremsdruckerzeuger zu koppeln. Ferner kann jede erste Ventilanordnung eine vierte Ventileinheit aufweisen, um wahlweise Bremsdruck an der der zweiten Ventilanordnung zugeordneten Radbremse abzubauen (z. B. in das erste drucklose Reservoir, das zweite drucklose Reservoir oder einen Fluiddruckspeicher).

Die erste Funktionseinheit kann ferner einen mit einem Bremspedal koppelbaren Bremszylinder umfassen. Des Weiteren kann die erste Funktionseinheit mit einer Umschalteinrichtung versehen sein, um wahlweise den ersten Bremsdruckerzeuger oder den Hauptzylinder mit wenigstens einer der Radbremsen zu koppeln.

Gemäß einer Variante ist die Untermenge der Radbremsen ausschließlich den Vorderrädern des Kraftfahrzeugs zugeordnet. In dieser Variante sind die Radbremsen der Hinterräder nicht von der Untermenge der Radbremsen umfasst.

Der erste Bremsdruckerzeuger kann eine mittels eines Elektromotors betätigbare, doppelwirkende Zylinder-Kolben-Anordnung (z. B. nach Art einer Plunger-Anordnung) umfassen. Anstatt einer doppelwirkenden Zylinder-Kolben-Anordnung kann auch eine einfach wirkende Zylinder-Kolben-Anordnung (z. B. nach Art einer Plunger-Anordnung), eine Zahnradpumpe oder eine Mehrkolbenpumpe vorgesehen sein.

Die zweite Funktionseinheit kann derart ausgebildet sein, dass der zweite Bremsdruckerzeuger an allen Radbremsen des Kraftfahrzeugs einen Bremsdruckaufbau durchzuführen vermag. Der Bremsdruckaufbau kann insbesondere im Zusammenhang mit einer Bremsdruckregelung erfolgen.

Der zweite Bremsdruckerzeuger kann eine Mehrkolbenpumpe umfassen. Jeder der Radbremsen kann wenigstens ein Kolben der Mehrkolbenpumpe zugeordnet sein, wobei ein einzelner Kolben oder einzelner Satz aus mehreren Kolben mehreren Radbremsen gemeinsam zugeordnet sein kann. Die Mehrkolbenpumpe kann zwei, drei, vier, sechs oder mehr Kolben umfassen.

Beispielsweise umfasst die Mehrkolbenpumpe wenigstens vier Kolben. Wenn die Bremsanlage zwei Vorderradbremsen und zwei Hinterradbremsen umfasst, kann jeder Vorderradbremse und jeder Hinterradbremse wenigstens einer dieser vier Kolben zugeordnet sein. Bei einer Sechskolbenpumpe können dementsprechend jeder Vorderradbremse genau zwei Kolben zugeordnet sein, wobei jeder Hinterradbremse genau ein Kolben zugeordnet ist. Die beiden Vorderradbremsen und die beiden Hinterradbremsen können dabei an die zweite Funktionseinheit angeschlossen sein.

Pro Radbremse kann ein separater, sich zwischen der ersten Funktionseinheit und der zweiten Funktionseinheit erstreckender Fluidpfad vorgesehen sein. So können bei einer Bremsanlage mit zwei Vorderradbremsen und zwei Hinterradbremsen sich vier Fluidpfade zwischen der ersten Funktionseinheit und der zweiten Funktionseinheit erstrecken. Die Fluidpfade ermöglichen gemäß einer Variante einen Bremsdruckaufbau an den einzelnen Radbremsen mittels des ersten Bremsdruckerzeugers. Zusätzlich oder alternativ hierzu können die Fluidpfade ein Ansaugen von Hydraulikfluid mittels des zweiten Bremskrafterzeugers aus der oder über die erste Funktionseinheit gestatten.

In einer Variante umfasst die Mehrkolbenpumpe wenigstens drei Kolben. Bei einer Bremsanlage mit zwei Vorderradbremsen und zwei Hinterradbremsen kann so jeder Vorderradbremse wenigstens ein Kolben zugeordnet sein. Den beiden Hinterradbremsen kann gemeinsam wenigstens ein Kolben zugeordnet sein. Bei einer Sechskolbenpumpe können jeder Vorderradbremse genau zwei Kolben zugeordnet sein, wobei den beiden Hinterradbremsen gemeinsam ebenfalls zwei Kolben zugeordnet sind.

In diesem Fall oder auch bei einer anderen Ausgestaltung des zweiten Bremsdruckerzeugers (z.B. als eine zentrale Plunger-Anordnung) können die beiden Vorderradbremsen an die zweite Funktionseinheit angeschlossen sein und die beiden Hinterradbremsen an die erste Funktionseinheit. Dabei kann sich pro Vorderradbremse ein separater, sich zwischen der ersten Funktionseinheit und der zweiten Funktionseinheit erstreckender Fluidpfad und für die Hinterradbremsen ein gemeinsamer, sich zwischen der ersten Funktionseinheit und der zweiten Funktionseinheit erstreckender Fluidpfad vorgesehen sein. Alternativ hierzu kann pro Vorderradbremse ein separater, sich zwischen der ersten Funktionseinheit und der zweiten Funktionseinheit erstreckender Fluidpfad vorgesehen sein, während der wenigstens eine, den beiden Hinterradbremsen gemeinsam zugeordnete Kolben in wenigstens einen dieser Fluidpfade Hydraulikfluid zur ersten Funktionseinheit zu fördern vermag. Im zuletzt genannten Fall kann ferner eine weitere Ventileinheit vorgesehen sein, die in ihrer sperrenden Stellung verhindert, dass über den Fluidpfad zur ersten Funktionseinheit gefördertes Hydraulikfluid zu den Vorderradbremsen oder eingangsseitig zu einem den Hinterradbremsen zugeordneten Fluidspeicher zu gelangen vermag.

Gemäß einem zweiten Aspekt wird ein Verfahren zum Betreiben einer hydraulischen Kraftfahrzeugbremsanlage angegeben. Die Bremsanlage umfasst eine erste Funktionseinheit mit wenigstens einem ersten elektrischen Bremsdruckerzeuger, der ausgebildet ist, an einer Mehrzahl von Radbremsen jeweils einen Bremsdruck zu erzeugen, und mit einer ersten Ventilanordnung pro Radbremse, wobei die erste Ventilanordnung für eine Bremsdruckregelung an der entsprechenden Radbremse ansteuerbar ist, um eine der ersten Ventilanordnung zugeordnete Radbremse wahlweise mit dem ersten Bremsdruckerzeuger oder einem drucklosen Reservoir für Hydraulikfluid zu koppeln. Die Bremsanlage umfasst ferner eine zweite Funktionseinheit mit wenigstens einem zweiten elektrischen Bremsdruckerzeuger, der ausgebildet ist, an einer Untermenge der Radbremsen jeweils einen Bremsdruck zu erzeugen, wobei ein Ausgang des zweiten Bremsdruckerzeugers aus Sicht des ersten Bremsdruckerzeugers stromabwärts der der entsprechenden Radbremse zugeordneten ersten Ventilanordnung angeordnet ist. Das Verfahren umfasst die Schritte des Erfassens eines Erfordernisses für eine Bremsdruckregelung bei mangelnder Funktionsfähigkeit der ersten Funktionseinheit sowie des Durchführens, auf das Erfassen hin, einer Bremsdruckregelung durch die zweite Funktionseinheit an wenigstens einer Radbremse der Untermenge.

Das Erfassen eines Erfordernisses für eine Bremsdruckregelung und das Erfassen einer mangelnden Funktionsfähigkeit der ersten Funktionseinheit können voneinander getrennte Schritte sein, die in beliebiger Reihenfolge ausgeführt werden. Gemäß einer anderen Variante stellt eine mangelnde Funktionsfähigkeit der ersten Funktionseinheit selbst das Erfordernis für eine Bremsdruckregelung dar.

Ebenfalls angegeben wird ein Verfahren zum Prüfen der zweiten Funktionseinheit der hier angegebenen elektrohydraulischen Kraftfahrzeug-Bremsanlage. Das Verfahren umfasst die Schritte des hydraulischen Abkoppelns der zweiten Funktionseinheit von der ersten Funktionseinheit (beispielsweise mittels eines oder mehrerer geeigneter Ventile), des Betätigens des zweiten Druckerzeugers zum Aufbauen eines Hydraulikdruckes an wenigstens einer Radbremse der Untermenge, des Ermitteins einer oder mehrerer der folgenden Parameter: eines an der entsprechenden Radbremse erzeugten Hydraulikdruckes und eines Füllstands eines der zweiten Funktionseinheit zugeordneten drucklosen Reservoirs für Hydraulikfluid, und des Prüfens der Funktionsfähigkeit der zweiten Funktionseinheit auf der Grundlage des wenigstens einen ermittelten Parameters.

Jedes der Verfahren kann einen oder mehrere weitere Schritte, wie oben und nachfolgend beschrieben, umfassen.

Ferner wird ein Computerprogrammprodukt angegeben, das Programmcode zum Durchführen des hier vorgestellten Verfahrens umfasst, wenn der Programmcode auf einem Kraftfahrzeug-Steuergerät ausgeführt wird.

Ebenfalls angegeben wird ein Kraftfahrzeug-Steuergerät oder Steuergerätsystem (aus mehreren Steuergeräten), wobei das Steuergerät oder Steuergerätsystem wenigstens einen Prozessor und wenigstens einen Speicher aufweist und wobei der Speicher Programmcode umfasst, der, wenn er von dem Prozessor ausgeführt wird, die Durchführung der Schritte eines der hier angegebenen Verfahren bewirkt.

### Kurze Beschreibung der Zeichnungen

Weitere Aspekte, Einzelheiten und Vorteile der vorliegenden Erfindung ergeben sich aus der nachfolgenden Beschreibung von Ausführungsbeispielen unter Bezugnahme auf die Figuren. Es zeigen:

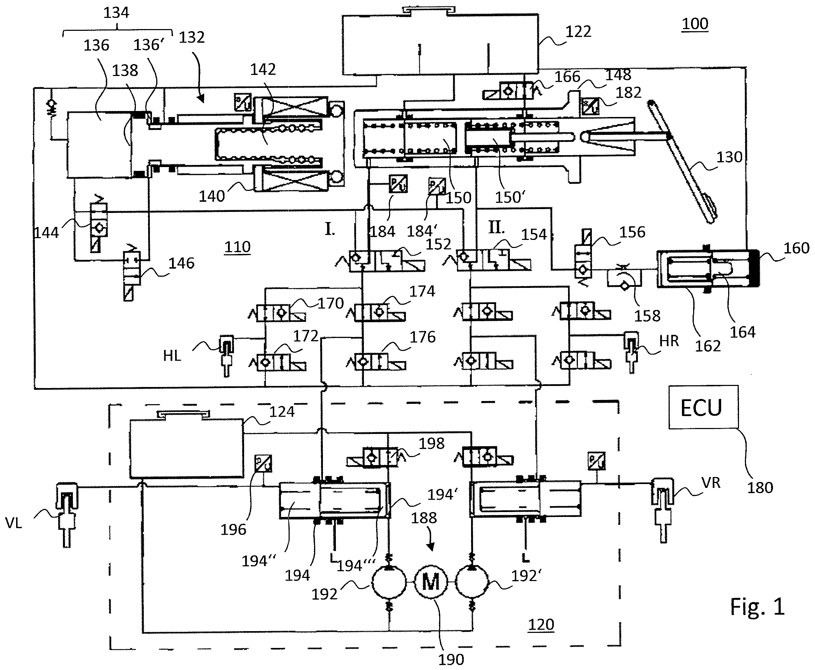

- Fign. 1 - 12: verschiedene Ausführungsbeispiele einer hydraulischen Kraftfahrzeug-Bremsanlage.

Einige Ausführungsbeispiele dienen lediglich dem besseren Verständnis der Erfindung. Die erfindungsgemäß vorhandenen Merkmale sind den unabhängigen Ansprüchen zu entnehmen.

### Detaillierte Beschreibung

In Fig. 1 ist das hydraulische Schaltbild eines ersten Ausführungsbeispiels einer hydraulischen Kraftfahrzeug-Bremsanlage 100 gemäß dem BBW-Prinzip gezeigt. Die Bremsanlage 100 ist ausgebildet, um auch für einen autonomen oder teilautonomen Fahrbetrieb geeignet zu sein.

Wie in Fig. 1 gezeigt, umfasst die Bremsanlage 100 eine erste Funktionseinheit 110, die eine elektrisch ansteuerbare Hauptbremsfunktion bereitstellt, und eine zweite Funktionseinheit 120, die in redundanter Weise eine elektrisch ansteuerbare Hilfsbremsfunktion implementiert. Während die erste Funktionseinheit 110 ausgebildet ist, an allen vier Radbremsen VL, VR, HL, HR des Kraftfahrzeugs einen Bremsdruck aufzubauen, ist die zweite Funktionseinheit 120 dazu ausgebildet, nur an den beiden Radbremsen VL, VR der Vorderräder einen Bremsdruck aufzubauen. In alternativen Ausführungsbeispielen könnte die zweite Funktionseinheit 120 dazu ausgebildet sein, nur an den beiden Radbremsen der Hinterräder HL, HR, an allen vier Radbremsen VL, VR, HL, HR oder an zwei diagonal gegenüberliegenden Radbremsen VL/HR oder VR/HL einen Bremsdruck aufzubauen.

Die erste Funktionseinheit 110 ist ausgelegt, eine von einem Fahrerbremswunsch entkoppelte Radbremsdruckregelung an einer oder mehreren der Radbremsen VL, VR, HL, HR durchzuführen. Die zweite Funktionseinheit 120 kann zumindest einige Radbremsdruck-Regelungsfunktionen der ersten Funktionseinheit 110 in redundanter Weise an den Radbremsen VL und VR übernehmen.

Die beiden Funktionseinheiten 110, 120 können als separate Module in getrennten Gehäuseblöcken untergebracht sein. Je nach Erfordernis kann so die erste Funktionseinheit 110 entweder alleine oder in Kombination mit der zweiten Funktionseinheit 120 verbaut werden.

Bezug nehmend auf Fig. 1 arbeitet die Bremsanlage 100 mittels eines Hydraulikfluids, das zum Teil in zwei drucklosen Reservoirs 122, 124 bevorratet ist. Während das erste drucklose Reservoir 122 der ersten Funktionseinheit 110 zugeordnet ist, ist das zweite drucklose Reservoir 124 der zweiten Funktionseinheit 120 zugeordnet. Das erste Reservoir 122 hat ein größeres Fassungsvermögen als das zweite Reservoir 124. Das Volumen des im zweiten Reservoir 124 bevorrateten Hydraulikfluids reicht jedoch zumindest dafür aus, das Fahrzeug auch bei einer erforderlichen Bremsdruckregelung an einer oder mehrerer der Radbremsen VL und VR sicher zum Stillstand bringen zu können. Dabei wird das zum Kompensieren von Bremsenverschleiß (z. B. an den Bremsbelägen) erforderliche zusätzliche Hydraulikvolumen nicht vom zweiten Reservoir 124, sondern vom ersten Reservoir 122 bereitgestellt.

Bremsdrücke an den Radbremsen VL, VR, HL, HR lassen sich mittels der ersten Funktionseinheit 110 und der zweiten Funktionseinheit 120 unabhängig voneinander durch unter Druck setzen von Hydraulikfluid erzeugen.

Die erste Funktionseinheit 110 umfasst zur autonomen, teilautonomen oder vom Fahrer an einem Bremspedal 130 angeforderten Bremsdruckerzeugung im BBW-Betrieb einen ersten elektrischen Bremsdruckerzeuger 132. Dieser Bremsdruckerzeuger 132 umfasst eine doppelwirkende Zylinder-Kolben-Anordnung 134 nach dem Plunger-Prinzip mit zwei Zylinderkammern 136, 136' und einem darin beweglichen Kolben 138. Der Kolben 138 des Bremsdruckerzeugers 132 wird von einem Elektromotor 140 über ein Getriebe 142 angetrieben. Das Getriebe 142 ist im Ausführungsbeispiel dazu ausgebildet, eine Rotationsbewegung des Elektromotors 140 in eine Translationsbewegung des Kolbens 138 umzusetzen.

Die Zylinderkammern 136, 136' sind sowohl mit dem Reservoir 122 als auch mit zwei Bremskreisen I. und II. koppelbar, wobei jeder Bremskreis I. und II. wiederum zwei Radbremsen VL, HL bzw. VR, HR versorgt. Auch eine anderweitige Zuweisung der vier Radbremsen VL, VR, HL, HR zu den beiden Bremskreisen I. und II. ist möglich (z. B. eine Diagonalaufteilung).

Dem elektrischen Bremsdruckerzeuger 132 sind im vorliegenden Ausführungsbeispiel zwei durch Elektromagnete betätigte und parallel zueinander geschaltete Ventile 144, 146 zugeordnet, um gemäß dem Prinzip der Doppelwirkung jeweils eine der Kammern 136, 136' mit den beiden Bremskreisen I. und II. fluidisch zu koppeln, während die andere Kammer Hydraulikfluid aus dem Reservoir 122 ansaugt. Im unbetätigten, also elektrisch nicht angesteuerten Zustand nehmen die Ventile 144, 146 die in Fig. 1 dargestellten Grundstellungen ein. Dies bedeutet, dass das Ventil 144 seine Durchflussstellung und das Ventil 146 seine Sperrstellung einnimmt, so dass bei einem Vorwärtshub (in Fig. 1 nach links) der Kolben 138 Hydraulikfluid aus der vorderseitigen Kammer 136 in die beiden Bremskreise I. und II. verdrängt. Um bei einem Rückwärtshub (in Fig. 1 nach rechts) des Kolbens 138 Hydraulikfluid aus der rückseitigen Kammer 136' in die beiden Bremskreise I. und II. zu verdrängen, wird nur das Ventil 144 angesteuert, also in seine Sperrstellung überführt. Das optionale Ventil 146 kann im Zusammenhang mit einer Entlüftung oder anderen Schritten angesteuert werden.

Zum Erzeugen von Bremsdruck im PT-Betrieb umfasst die erste Funktionseinheit 110 ferner einen Hauptzylinder 148, der vom Fahrer durch das Pedal 130 zu betätigen ist. Der Hauptzylinder 148 wiederum umfasst zwei Kammern 150, 150', wobei die erste Kammer 150 mit dem ersten Bremskreis I. und die zweite Kammer 150' mit dem zweiten Bremskreis II. gekoppelt ist.

Von dem Hauptzylinder 148 ausgehend können die beiden Bremskreise I. und II. in redundanter Weise zum elektrischen Bremsdruckerzeuger 132 mit unter Druck gesetztem Hydraulikfluid versorgt werden. Dafür sind zwei durch Elektromagnete betätigte Ventilen 152, 154 vorgesehen, die im unbetätigten, also elektrisch nicht angesteuerten Zustand die in Fig. 1 dargestellten Grundstellungen einnehmen. In diesen Grundstellungen koppeln die Ventile 152, 154 den Hauptzylinder 148 mit den Radbremsen VL, VR, HL, HR. So kann auch bei Ausfall der Energieversorgung (und einem damit einhergehenden Ausfall des elektrischen Bremsdruckerzeugers 132) noch immer vom Fahrer mittels des dann auf den Hauptzylinder 148 einwirkenden Bremspedals 130 ein Hydraulikdruck an den Radbremsen VL, VR, HL, HR aufgebaut werden (PT-Betrieb).

Im BBW-Betrieb sind die Ventilen 152, 154 hingegen so geschaltet, dass der Hauptzylinder 148 fluidisch von den beiden Bremskreisen I. und II. entkoppelt wird, während der elektrische Bremsdruckerzeuger 132 mit den Bremskreisen I. und II. gekoppelt ist. Bei von den Bremskreisen I. und II. entkoppeltem Hauptzylinder 148 wird bei einer Betätigung des Bremspedals 130 das aus dem Hauptzylinder 148 verdrängte Hydraulikfluid somit nicht in die Bremskreise I. und II. gefördert, sondern über ein durch einen Elektromagneten betätigtes 2/2-Wegeventil 156 und eine Drosseleinrichtung 158 in einen Simulator 160. Das Ventil 156 nimmt in seiner elektrisch nicht angesteuerten Grundstellung im BBW-Betrieb die in Fig. 1 dargestellte Stellung ein, in der der Hauptzylinder 148 vom Simulator 160 abgekoppelt ist, damit Hydraulikfluid in die Bremskreise I. und II. gefördert werden kann.

Der Simulator 160 ist dazu vorgesehen, dem Fahrer bei hydraulischer Abkopplung des Hauptzylinders 148 von den Bremskreisen I. und II. das gewohnte Pedalrückwirkungsverhalten zu vermitteln. Um Hydraulikfluid aus dem Hauptzylinder 148 aufnehmen zu können, umfasst der Simulator 160 einen Zylinder 162, in dem ein Kolben 164 entgegen einer Federkraft verlagerbar ist.

Ein weiteres durch einen Elektromagneten betätigtes 2/2-Wegeventil 166 zwischen dem Hauptzylinder 148 und dem Reservoir 122 ermöglicht in seiner elektrisch nicht angesteuerten Grundstellung gemäß Fig. 1, dass im PT-Betrieb Hydraulikfluid aus dem Reservoir 122 in den Hauptzylinder 148 gelangen kann. In seiner elektrisch angesteuerten Stellung koppelt das Ventil 166 den Hauptzylinder 148 hingegen von dem Reservoir 122 ab.

Die hydraulische Verbindung der Radbremsen VL und VR wird von durch Elektromagnete betätigte 2/2-Wegeventile 170, 172, 174, 176 bestimmt, die im unbetätigten, also elektrisch nicht angesteuerten Zustand die in Fig. 1 dargestellten Grundstellungen einnehmen. Dies bedeutet, dass die Ventile 170, 174 jeweils ihre Durchflussstellung und die Ventile 172, 176 jeweils ihre Sperrstellung einnehmen. Da die beiden Bremskreise I. und II. symmetrisch ausgebildet sind, wird hier und im Folgenden auf eine Beschreibung der dem zweiten Bremskreis II. bzw. den Radbremsen HL und HR zugeordneten Komponenten verzichtet.

Wie in Fig. 1 dargestellt, ist die zweite Funktionseinheit 120 im Fluidpfad zwischen den Ventilen 174, 176 und der Radbremse VL angeordnet (und aus Symmetriegründen gilt Entsprechendes für die Radbremse VR). Die zweite Funktionseinheit 120 nimmt bei voller Funktionsfähigkeit der ersten Funktionseinheit 110 eine Durchlass-Stellung ein. Zum Ausführen von Normalbremsungen besteht daher bei der in Fig. 1 dargestellten Grundstellung der Ventile 170, 172, 174, 176 eine unmittelbare hydraulische Verbindung zwischen dem elektrischen Bremsdruckerzeuger 132 (oder, je nach Stellung der Ventile 152, 154, dem Hauptzylinder 148) auf der einen Seite und andererseits den Radbremsen HL bzw. VL des ersten Bremskreises I. (und Entsprechendes gilt für die Radbremsen HR bzw. VR des zweiten Bremskreises II.).

Die beiden Ventile 170 und 172 bilden eine der Radbremse HL zugeordnete Ventilanordnung, während die beiden Ventile 174 und 176 eine der Radbremse VL zugeordnete Ventilanordnung bilden. Aus Sicht des elektrischen Bremsdruckerzeugers 132 ist die zweite Funktionseinheit 120 damit stromabwärts der Ventilanordnung 174, 176 vorgesehen und zwischen diese Ventilanordnung 174, 176 und die zugeordnete Radbremse VL geschaltet.

Wie nachfolgend erläutert werden wird, sind die beiden, den Radbremsen HL und VL zugeordneten Ventilanordnungen 170, 172 bzw. 174, 176 sowie der Bremsdruckerzeuger 132 jeweils dazu ausgebildet, um für Radbremsdruckregelvorgänge an der jeweiligen Radbremse HL bzw. VL angesteuert zu werden. Ein für die Ansteuerung der Ventilanordnungen 170, 172 bzw. 174, 176 und des Bremsdruckerzeugers 132 im Rahmen der Radbremsdruckregelvorgänge vorgesehenes Steuergerät 180 (auch als Electronic Control Unit, ECU, bezeichnet) ist ebenfalls schematisch in Fig. 1 dargestellt. Das Steuergerät 180 implementiert beispielsweise die Radbremsdruck-Regelungsfunktionen eines Antiblockiersystems (ABS), einer Fahrdynamikregelung (z. B. einer Electronic Stability Control, ESC), einer Antriebsschlupfregelung (ASR) oder einer adaptiven Geschwindigkeitsregelung (Adaptive Cruise Control, ACC). Selbstverständlich kann anstelle eines einzigen Steuergeräts 180 auch eine Mehrzahl von solchen Steuergeräten vorgesehen sein, die für unterschiedliche Radbremsdruck-Regelungsfunktionen (ggf. in komplementärer oder in redundanter Weise) zuständig sind.

Bei einer Antiblockierregelung (ABS) gilt es, während einer Bremsung ein Blockieren der Räder zu verhindern. Dazu ist es erforderlich, den Bremsdruck in den Radbremsen VL, VR, HL, HR individuell zu modulieren. Dies geschieht durch Einstellen in zeitlicher Folge wechselnder Druckaufbau-, Druckhalte- und Druckabbauphasen, die sich durch geeignete Ansteuerung der den Radbremsen HL bzw. VL zugeordneten Ventilanordnungen 170, 172 bzw. 174, 176 sowie ggf. des Bremsdruckerzeugers 132 ergeben.

Während einer Druckaufbauphase nehmen die Ventile 170, 172 bzw. 174, 176 jeweils ihre Grundstellung ein, so dass ein Erhöhen des Bremsdrucks in den Radbremsen HL bzw. VL (wie bei einer BBW-Bremsung) mittels des Bremsdruckerzeugers 132 erfolgt. Für eine Druckhaltephase wird nur das Ventil 170 bzw. 174 angesteuert, also in seine Sperrstellung überführt. Da ein Ansteuern des Ventils 172 bzw. 176 dabei nicht erfolgt, verbleibt es in seiner Sperrstellung. Dadurch ist die Radbremse HL bzw. VL hydraulisch abgekoppelt, so dass ein in der Radbremse HL bzw. VL anstehender Bremsdruck konstant gehalten wird. Bei einer Druckabbauphase wird sowohl das Ventil 170 bzw. 174 als auch das Ventil 172 bzw. 176 angesteuert, also das Ventil 170 bzw. 174 in seine Sperrstellung und das Ventil 172 bzw. 176 in seine Durchflussstellung überführt. Somit kann Hydraulikfluid aus der Radbremse HL bzw. VL in Richtung des Reservoirs 122 abfließen, um einen in der Radbremse HL bzw. VL anstehenden Bremsdruck zu erniedrigen.

Andere Bremsdruckregelvorgänge im Normalbremsbetrieb erfolgen automatisiert und typischerweise unabhängig von einer Betätigung des Bremspedals 130 durch den Fahrer. Solche automatisierten Regelungen des Radbremsdrucks erfolgen beispielsweise im Zusammenhang mit einer Antriebsschlupfregelung (ASR), die ein Durchdrehen einzelner Räder bei einem Anfahrvorgang durch gezieltes Abbremsen verhindert, einer Fahrdynamikregelung (ESC), die das Fahrzeugverhalten im Grenzbereich durch gezieltes Abbremsen einzelner Räder an den Fahrerwunsch und die Fahrbahnverhältnisse anpasst, oder einer adaptiven Geschwindigkeitsregelung (ACC), die unter anderem durch selbsttätiges Bremsen einen Abstand des eigenen Fahrzeugs zu einem vorausfahrenden Fahrzeug einhält.

Beim Ausführen einer automatischen Radbremsdruckregelung kann an wenigstens einer der Radbremsen HL bzw. VL durch Ansteuern des Bremsdruckerzeugers 132 durch das Steuergerät 180 ein Bremsdruck aufgebaut werden. Dabei nehmen die den Radbremsen HL bzw. VL zugeordneten Ventile 170, 172 bzw. 174, 176 zunächst deren in Fig. 1 veranschaulichten Grundstellungen ein. Ein Feineinstellen oder Modulieren des Bremsdrucks kann durch entsprechende Ansteuerung des Bremsdruckerzeugers 132 sowie der den Radbremsen HL bzw. VL zugeordneten Ventile 170, 172 bzw. 174, 176 vorgenommen werden, wie im Zusammenhang mit der ABS-Regelung oben beispielhaft erläutert.

Die Radbremsdruckregelung mittels des Steuergeräts 180 geschieht allgemein in Abhängigkeit von einerseits das Fahrzeugverhalten beschreibenden Messgrößen (z. B. Raddrehzahlen, Giergeschwindigkeit, Querbeschleunigung, usw.) und andererseits den Fahrerwunsch beschreibenden Messgrößen (z. B. Betätigung des Pedals 130, Lenkradwinkel, usw.). Ein Verzögerungswunsch des Fahrers kann beispielsweise mittels eines Wegsensors 182 ermittelt werden, der mit dem Bremspedal 130 oder einem Eingangsglied des Hauptbremszylinders 148 gekoppelt ist. Als den Fahrerwunsch beschreibende Messgröße kann alternativ oder zusätzlich hierzu der im Hauptbremszylinder 148 vom Fahrer erzeugte Bremsdruck p herangezogen werden, der dann mittels wenigstens eines Sensors erfasst wird. In Fig. 1 ist jedem der Bremskreise I. und II. hierfür ein eigener Drucksensor 184, 184' zugeordnet.

Wie oben erläutert, ist aus Sicht des Bremsdruckerzeugers 132 die zweite Funktionseinheit 120 stromabwärts der Ventilanordnung 174, 176 vorgesehen und zwischen diese Ventilanordnung 174, 176 und die zugeordnete Radbremse VL geschaltet. Konkret ist ein Hydraulikfluideingang der zweiten Funktionseinheit 120 zwischen einen Ausgang des Ventils 174 und einen Eingang des Ventils 176 gekoppelt (in Flussrichtung vom Druckerzeuger 132 zum Reservoir 122 hin gesehen).

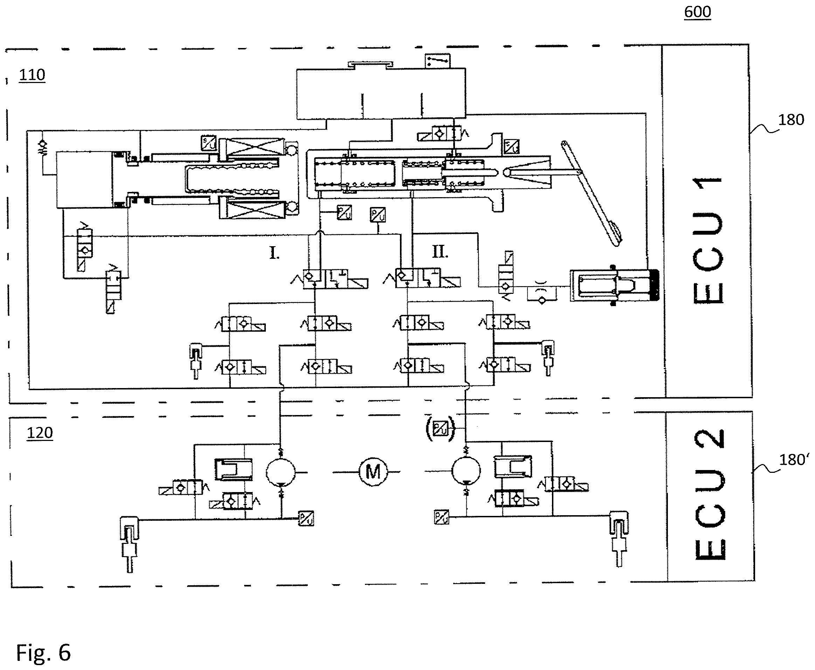

Die zweite Funktionseinheit 120 umfasst das bereits angesprochene drucklose Reservoir 124, das zusätzlich zum ersten drucklosen Reservoir der ersten Funktionseinheit 110 vorgesehen ist. Ferner umfasst die zweite Funktionseinheit 120 einen weiteren elektrischen Bremsdruckerzeuger 188. Der weitere Bremsdruckerzeuger 188 ist durch das Steuergerät 180 oder ein separates Steuergerät (vgl. Fig. 6) ansteuerbar.

Der Bremsdruckerzeuger 188 umfasst im Ausführungsbeispiel einen Elektromotor 190 sowie pro Bremskreis I. bzw. II. (hier: pro Radbremse VL bzw. VR) eine beispielsweise als Zahnrad- oder Radialkolbenpumpe ausgeführte Pumpe 192, 192'. Jede Pumpe 192, 192' ist entgegen ihrer Förderrichtung sperrend, wie anhand der Sperrventile am Ausgang und Eingang der Pumpen 192, 192' dargestellt. Die Pumpen 192, 192' sind jeweils konfiguriert, um Hydraulikfluid aus dem Reservoir 124 anzusaugen. Da die Drehzahl des Elektromotors 192 einstellbar ist, kann auch die Fördermenge der Pumpen 192, 192' mittels entsprechender Ansteuerung des Elektromotors 192 eingestellt werden. In einer anderen Ausführungsform könnten die beiden Pumpen 192, 192' auch durch eine einzige, nach dem Plunger-Prinzip arbeitende Pumpe ersetzt werden (beispielsweise mit einer einfach- oder doppelwirkenden Zylinder-Kolben-Anordnung).

Auch die zweite Funktionseinheit 120 ist in Bezug auf die Bremskreise I. und II. symmetrisch ausgebildet. Daher werden im Folgenden wiederum nur die dem ersten Bremskreis I. (hier: der Radbremse VL) zugeordneten Komponenten der zweiten Funktionseinheit 120 näher erläutert. Diese Komponenten umfassen (neben der Pumpe 192) eine Zylinder-Kolben-Anordnung 194, einen ausgangsseitig dieser Anordnung 194 vorgesehener Drucksensor 196 sowie ein Ventil 198.

Die Zylinder-Kolben-Anordnung 194 ermöglicht eine hydraulische Trennung zwischen dem Hydrauliksystem der ersten Funktionseinheit 110 und dem Hydrauliksystem der zweiten Funktionseinheit 120. Diese Trennung ist insbesondere bei einer mangelhaften Funktionsfähigkeit der ersten Funktionseinheit 110 aufgrund einer Leckage von Vorteil.

Das Ventil 198 ist zwischen einem Ausgang des Druckerzeugers 188 (d. h., der Pumpe 192) einerseits und dem Reservoir 124 auf der anderen Seite vorgesehen. Konkret handelt es sich bei dem Ventil 198 um ein durch einen Elektromagneten betätigtes 2/2-Wegeventil. In der elektrisch nicht angesteuerten Grundstellung des Ventils 198 gemäß Fig. 1 fördert die Pumpe 192 im Betrieb Hydraulikfluid aus dem Reservoir 122 in das Reservoir 122 zurück.

In der elektrisch angesteuerten Stellung des Ventils 198 wird das Reservoir 124 vom Pumpenausgang abgekoppelt, so dass die Pumpe 192 im Betrieb Hydraulikfluid aus dem Reservoir 124 in eine eingangsseitige Kammer 194' der Zylinder-Kolben-Anordnung 194 fördert (der Fluidpfad von der Pumpe 192 zum Ventil 198 läuft durch die eingangsseitige Kammer 194' hindurch). Auf diese Weise wird ein zwischen der eingangsseitigen Kammer 194' und einer ausgangsseitigen Kammer 194" der Zylinder-Kolben-Anordnung vorgesehener Trennkolben 194‴ verschoben und Hydraulikfluid aus der ausgangsseitigen Kammer 194" zur Radbremse VL gefördert. Dadurch wird ein Radbremsdruck an der Radbremse VL erzeugt oder erhöht. Der mit L bezeichnete Pfad aus der Zylinder-Kolben-Anordnung 194 stellt einen Leckage-Pfad dar und ermöglicht eine zuverlässige Trennung der beiden Hydrauliksysteme bei einer Leckage an den Druckdichtungen der Zylinder-Kolben-Anordnung 194.

Der Fluidpfad von der Ventilanordnung 174, 176 zur Radbremse VL verläuft in der in Fig. 1 dargestellten Grundstellung der Zylinder-Kolben-Anordnung 194 durch die ausgangsseitige Kammer 194" dieser Anordnung 194 hindurch. Die Zylinder-Kolben-Anordnung 194 weist in dieser Grundstellung eine vernachlässigbare Drosselwirkung für das vom Druckerzeuger 132 zur Radbremse VL geförderte oder von der Radbremse VL in das Reservoir 122 abgelassene Hydraulikfluid auf.

Sobald allerdings der Kolben 194' der Zylinder-Kolben-Anordnung 194 aus seiner Grundstellung heraus verschoben wird (wenn also die Pumpe 192 Hydraulikfluid aus dem Reservoir 124 in die eingangsseitige Kammer 194' der Zylinder-Kolben-Anordnung 194 fördert), wird mittels des Kolbens 194' die Radbremse VL von der ersten Funktionseinheit 110 und damit vom Druckerzeuger 132 und dem Reservoir 124 hydraulisch abgekoppelt. Die Radbremsdruckregelung an der Radbremse VL erfolgt im diesem Fall ausschließlich über die zweite Funktionseinheit 120. Konkret wird zur Druckregelung der an der Radbremse VL aktuell vorherrschende Druck mittels des Drucksensors 196 erfasst. Dabei wird durch geeignetes Ansteuern des Druckerzeugers 188 und damit der Pumpe 192 (Druckaufbau) oder des Regelventils 198 (Druckabbau) auf einen Zieldruckwert hin geregelt. Die entsprechende Druckauswertung und Ansteuerung des Druckerzeugers 188 sowie des Regelventils 198 erfolgt, wie oben dargelegt, durch das Steuergerät 180 oder ein separates Steuergerät für die zweite Funktionseinheit 120 (vgl. Fig. 6).

Sobald demnach eine mangelnde Funktionsfähigkeit der ersten Funktionseinheit 110 erfasst wird (z. B. aufgrund eines Ausfalls des Druckerzeugers 132 oder einer Leckage im Bereich der ersten Funktionseinheit 110), kann die die zweite Funktionseinheit 120 in redundanter Weise zur ersten Funktionseinheit 110 das Fahrzeug unverzüglich zum Stillstand bringen und dabei eine möglicherweise erforderliche ABS-Regelung an den Radbremsen VL und VR übernehmen. Zusätzlich oder alternativ hierzu lassen sich mittels der zweiten Funktionseinheit 120 bei Ausfall der ersten Funktionseinheit 110 eine oder mehrere der folgenden (oder andere) Bremsdruckregelfunktionalitäten autonom durchführen: ESC, ASR und ACC.

Die mit der zweiten Funktionseinheit 120 geschaffene Redundanz ermöglicht daher die Verwendung der in Fig. 1 dargestellten Kraftfahrzeug-Bremsanlage 100 auch für die Anwendungsfälle des autonomen oder teilautonomen Fahrens. Insbesondere in diesem Anwendungsfall könnten der Hauptzylinder 148 und dessen begleitende Komponenten (wie das Bremspedal 130 und der Simulator 160) auch komplett entfallen.

Durch die in Fig. 1 dargestellte Ausführung der zweiten Funktionseinheit 120 mit Trennkolben 194‴ und separatem Reservoir 124 entfallen zusätzliche Drosselstellen (wie z. B. im Bereich der ersten Funktionseinheit 110 in Gestalt der Ventile 152, 170, 172, usw. vorhanden). Solche Drosselstellen beeinflussen beispielsweise bei einer ABS-Regelung die so genannten "time to lock" der entsprechenden Radbremse bei einem erforderlichen schnellen Druckaufbau in negativer Weise. Ferner kann mithilfe eines einzigen Regelventils 198 pro Radbremse eine ausreichende ABS-Funktionalität erzielt werden. Die zweite Funktionseinheit 120 könnte, wie oben dargelegt, als eigenständiges Modul (und ggf. mit vorgefülltem Reservoir 124) ans Band geliefert und montiert werden, so dass nach Anschluss der Bremsleitungen nur noch die übliche Entlüftungsprozedur durchgeführt werden muss.

Aufgrund der zwei separaten Hydrauliksysteme im Ausführungsbeispiel gemäß Fig. 1 muss insbesondere das Hydrauliksystem der zweiten Funktionseinheit 120, das ja nur in Notfällen zum Einsatz gelangt, fortlaufend (z. B. periodisch) überprüft werden.

Hierzu wird bei sicherem Stillstand des Fahrzeugs (z. B. bei geschlossener Parkbremse oder aktivierter Getriebesperre) automatisch in bestimmten Intervallen die Pumpe 192 vom Steuergerät 180 betätigt. Die Pumpe 192 fördert daraufhin bei geschlossenem Ventil 198 Hydraulikfluid aus dem Reservoir 124, dessen Füllstand entsprechend sinkt. Der Trennkolben 194‴ wird verschoben, wodurch - wie oben beschrieben - die erste Funktionseinheit hydraulisch von der Radbremse VL und auch der zweiten Funktionseinheit 120 abgekoppelt wird. Gleichzeitig kommt es zu einem Druckaufbau an der Radbremse VL. Mittels des Drucksensors 196 lässt sich dieser Druck zu Prüfzwecken messen. Ebenfalls messen lässt sich mittels eines optionalen Füllstandsensors die mit der Raddruckzunahme einhergehende Verringerung des Füllstands des Hydraulikfluids im Reservoir 124. Die entsprechend gemessenen Parameter lassen sich mit Sollwerten vergleichen, um die Funktionsfähigkeit der zweiten Funktionseinheit 120 zu überprüfen.

Idealerweise ist der Füllstandsensor so angeordnet, dass er bereits eine geringe Abnahme des Füllstands im Reservoir 124 erkennen kann (z. B. von weniger als ca. 30% und insbesondere weniger als ca. 15%). Auf diese Weise ist es nicht erforderlich, dass mittels der Pumpe 192 ein besonders hoher Druck an der Radbremse 192 aufgebaut wird, was Verschleiß, Prüfdauer, Energieverbrauch usw. reduziert.

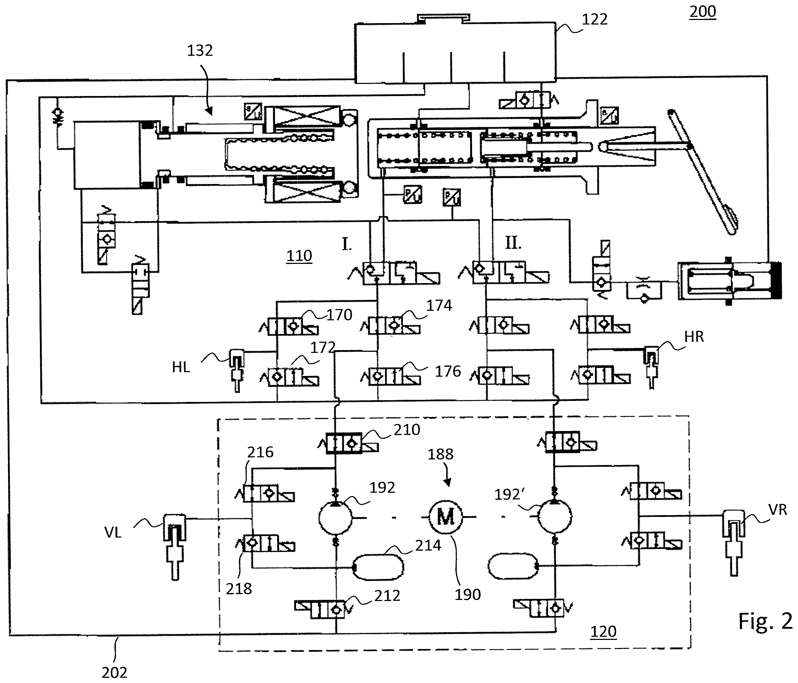

Die Fign. 2 bis 12 zeigen weitere Ausführungsbeispiele von Kraftfahrzeug-Bremsanlagen 200 bis 1200. Diese weiteren Ausführungsbeispiele basieren auf dem unter Bezugnahme auf Fig. 1 beschriebenen ersten Ausführungsbeispiel, insbesondere hinsichtlich der ersten Funktionseinheit 110. Aus diesem Grund werden im Folgenden hauptsächlich die Unterschiede zum ersten Ausführungsbeispiel beschrieben. Diese Unterschiede betreffen im Wesentlichen den Aufbau der zweiten Funktionseinheit 120 und den Anschluss dieser zweiten Funktionseinheit 120 an die erste Funktionseinheit 110 sowie an die Radbremsen. Dieselben Bezugszeichen bezeichnen dabei dieselben oder ähnliche Komponenten. Ferner werden hinsichtlich der zweiten Funktionseinheit 120 wiederum zumeist nur die Komponenten für den ersten Bremskreis I. (hier: die Radbremse VL) erläutert, da die zweite Funktionseinheit 120 in Bezug auf die beiden Bremskreise I. und II. in den meisten Ausführungsbeispielen symmetrisch aufgebaut ist.

Bezug nehmend auf das zweite Ausführungsbeispiel der Kraftfahrzeug-Bremsanlage 200 gemäß Fig. 2 besteht ein Unterschied zum ersten Ausführungsbeispiel gemäß Fig. 1 darin, dass die zweite Funktionseinheit 120 auf das separate Reservoir 124 und die Zylinder-Kolben-Anordnung 194 (mit dem Trennkolben 194‴) verzichtet. Damit wurde auch auf zwei getrennte Hydrauliksysteme verzichtet. Auf diese Weise entfällt eine separate Wartung des der zweiten Funktionseinheit 120 zugeordneten Hydrauliksystems. Insbesondere stellt damit eine Alterung des Hydraulikfluids in diesem Hydrauliksystem kein Problem dar und dessen regelmäßiger Austausch entfällt. Andererseits wird die Redundanz des Gesamtsystems verringert, beispielsweise bei Leckage eines der beiden Hydrauliksysteme gemäß Fig. 1. Diese verringerte Redundanz wird allerdings bei dem Ausführungsbeispiel gemäß Fig. 2 durch das Beibehalten der beiden größtenteils voneinander getrennten Bremskreise I. und II. gemildert.

Gemäß dem zweiten Ausführungsbeispiel "teilen" sich nun die beiden Funktionseinheiten 110, 120 ein Hydrauliksystem (nämlich das der ersten Funktionseinheit 110 mit dem Reservoir 122, vgl. das erste Ausführungsbeispiel). Damit wird auch die zweite Funktionseinheit 120 vollständig mit Hydraulikfluid aus dem Reservoir 122 betrieben und fördert das Hydraulikfluid in dieses Reservoir 122 zurück (vgl. Rückflussleitung 202 in Fig. 2).

Der Entfall der Zylinder-Kolben-Anordnung 194 (mit dem Trennkolben 194‴) aus Fig. 1 wird im zweiten Ausführungsbeispiel durch das Vorsehen eines Trennventils 210 kompensiert. Das Trennventil 210 bildet eine eingangsseitige Komponente der zweiten Funktionseinheit 120 und ermöglicht eine hydraulische Abkopplung der zweiten Funktionseinheit 120 von der ersten Funktionseinheit 110 bei einer Funktionsstörung der ersten Funktionseinheit 110 (z. B. bei einem Ausfall des Druckerzeugers 132).

Das im zweiten Ausführungsbeispiel als ein durch einen Elektromagneten betätigtes 2/2-Wegeventil ausgebildete Trennventil 210 ermöglicht in seiner elektrisch nicht angesteuerten Grundstellung gemäß Fig. 2, dass Hydraulikfluid aus der ersten Funktionseinheit 110 zur Radbremse VL gelangen kann. In seiner elektrisch angesteuerten Stellung koppelt das Trennventil 210 hingegen die erste Funktionseinheit 110 zumindest in eine Richtung von der Radbremse VL ab. Konkret besitzt das Trennventil 210 in seiner elektrischen angesteuerten Stellung eine einseitige Sperrwirkung. So kann Hydraulikfluid weiter aus der ersten Funktionseinheit 110 über die zweite Funktionseinheit 120 zur Radbremse VL gefördert werden, aber kein Hydraulikfluid aus der zweiten Funktionseinheit 120 in die erste Funktionseinheit 110 entweichen (z. B. bei einer Betätigung des Druckerzeugers 188).

Die zweite Funktionseinheit 120 weist ausgangsseitig zum Reservoir 122 ein durch einen Elektromagneten betätigtes 2/2-Wegeventil 212 auf. Dieses Ventil 212 verhindert in seiner elektrisch nicht angesteuerten Grundstellung gemäß Fig. 2, dass Hydraulikfluid aus dem Reservoir 122 vom Druckerzeuger 188 angesaugt wird. Vielmehr wird bei Betrieb des Druckerzeugers Hydraulikfluid aus einem Druckspeicher 214 entnommen, wenn das Ventil 212 sich in seiner Grundstellung befindet. Der Druckspeicher 214 hat ein ausreichendes Volumen, um das Fahrzeug bei einer Notbremsung zum Stillstand bringen zu können.

Konkret besitzt das Ventil 212 in seiner Grundstellung eine einseitig sperrende Wirkung. Gemäß dieser einseitig sperrenden Wirkung kann Hydraulikfluid aus der zweiten Funktionseinheit 120 in das Reservoir entweichen, aber - wie erläutert - bei einer Betätigung des Druckerzeugers 188 nicht aus dem Reservoir 122 angesaugt werden. Ferner nimmt das Ventil 212 in seinem elektrisch angesteuerten Zustand eine Durchlassstellung ein, so dass Hydraulikfluid von der Pumpe 192 aus dem Reservoir 122 angesaugt oder von der Radbremse VL in das Reservoir 122 abgelassen werden kann.

Zwischen den beiden Ventilen 210 und 212 und parallel zur Pumpe 192 sind zwei weitere Ventile 216 und 218 vorgesehen. Die hydraulische Verbindung vom Druckerzeuger 188 zur Radbremse VL wird durch diese elektromagnetisch betätigte 2/2-Wegeventilen 216 und 218 bestimmt. Die Ventile 216, 218 nehmen im unbetätigten, also elektrisch nicht angesteuertem Zustand die in Fig. 2 dargestellten Grundstellungen einnehmen. Dies bedeutet, dass das Ventil 216 seine Durchflussstellung und das Ventil 218 seine Sperrstellung einnimmt. Hinsichtlich der Funktionalität der Ventile 216 und 218 sowie des Druckerzeugers 188 bei eigenständigen Druckregelvorgängen der zweiten Funktionseinheit 120 sei auf die obigen Ausführungen hinsichtlich der beiden Ventile 174 und 176 sowie des Druckerzeugers 132 verwiesen. Diese Komponenten (und deren Funktionen wie z. B. einer ABS- oder ESC-Regelung) sind daher in redundanter Weise sowohl bei der ersten Funktionseinheit 110 als auch bei der zweiten Funktionseinheit 120 vorhanden.

Optional kann die zweite Funktionseinheit 120 noch einen in Fig. 2 nicht dargestellten Drucksensor (vgl. Bezugszeichen 196 in Fig. 1) umfassen. Dieser Drucksensor kann bei eigenständigen Druckregelvorgängen der zweiten Funktionseinheit 120 wie oben geschildert zum Einsatz kommen.

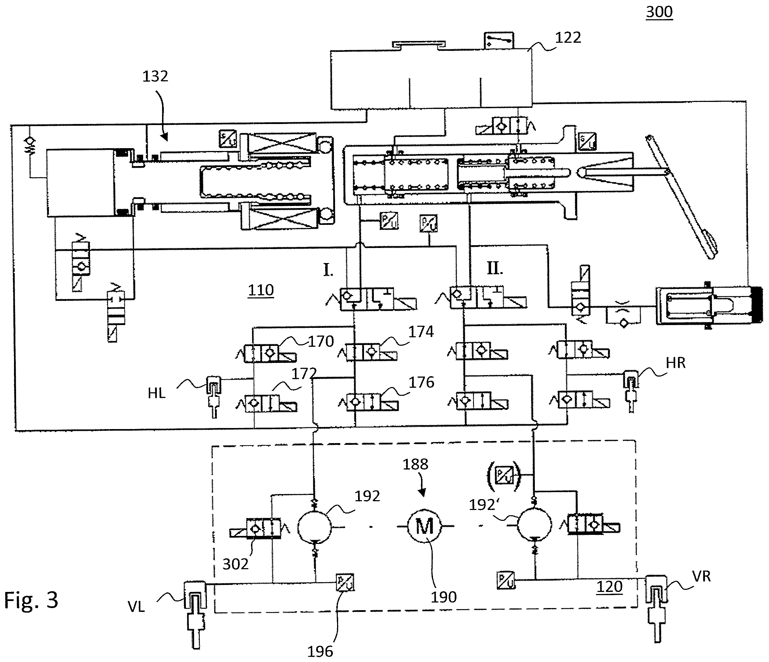

Nun Bezug nehmend auf das dritte Ausführungsbeispiel einer Kraftfahrzeug-Bremsanlage 300 gemäß Fig. 3 besteht ein Unterschied zum ersten Ausführungsbeispiel darin, dass wiederum auf das separate Reservoir 124 und die Zylinder-Kolben-Anordnung 194 (mit dem Trennkolben 194‴) in der zweiten Funktionseinheit 120 verzichtet wird. Damit wird auch auf zwei getrennte Hydrauliksysteme verzichtet. Des Weiteren besteht ein Unterschied zum zweiten Ausführungsbeispiel darin, dass auf die direkte Ansaugleitung 202 für die Pumpe 192 zum Reservoir 122 hin und auf den Druckspeicher 214 verzichtet wurde. Im Einsatzfall der zweiten Funktionseinheit 120 saugt die Pumpe 192 daher unmittelbar über den entsprechenden eingangsseitigen Anschluss zur ersten Funktionseinheit 110 über diese (und das entsprechend geöffnete Ventil 176) aus dem Reservoir 122 an.

Die Druckregelung im Einsatzfall der zweiten Funktionseinheit 120 erfolgt durch fortlaufendes Auslesen des vorherrschenden Drucks über den Drucksensor 196 und entsprechendes Ansteuern die Pumpe 192. Ein optionaler, eingangsseitig der zweiten Funktionseinheit vorgesehener Drucksensor (nicht dargestellt) könnte zur Erkennung eines Einbremsens des Fahrers (z. B. über den Hauptzylinder 148) in die aktive zweite Funktionseinheit 120 vorgesehen werden. Auf diese Weise ließe sich eine von der zweiten Funktionseinheit 120 gerade durchgeführte ACC-Regelung zugunsten einer Notbremsung des Fahrzeugs bis zum Stillstand abbrechen.

Ein im Ausführungsbeispiel als durch einen Elektromagneten betätigtes 2/2-Wegeventil ausgebildetes Bypass-Ventil 302 ist parallel zur Pumpe 192 geschaltet. Dieses Ventil 302 nimmt im unbetätigten, also elektrisch nicht angesteuerten Zustand die in Fig. 3 dargestellte Grundstellung ein. Grundstellung heißt hier, dass das Ventil 302 seine Durchflussstellung einnimmt. Auf diese Weise kann Hydraulikfluid von der ersten Funktionseinheit 110 zur Radbremse VL gefördert werden und wieder zurück zur ersten Funktionseinheit 110 (und zum Reservoir 122) fließen.

Im elektrisch angesteuerten Zustand nimmt das Ventil 302 eine Sperrstellung derart ein, dass von der Pumpe 192 gefördertes Hydraulikfluid zur Radbremse VL gelangt und nicht zur ersten Funktionseinheit 110 hin entweichen kann. Ein solches Entweichen (in der Durchlass-Stellung des Ventils 302) kann im Rahmen einer Druckregelung seitens der zweiten Funktionseinheit 120 allerdings dann gewünscht sein, wenn Bremsdruck an der Radbremse VL abgebaut werden muss (z. B. im Rahmen einer ABS-Regelung). Da das Ventil 302 in seiner Sperrstellung im Ausführungsbeispiel nur einseitig sperrt, kann der Bremsdruck an der Radbremse VL noch immer mittels der ersten Funktionseinheit 110 (z. B. bei Betätigen des Hauptzylinders 148 im PT-Betrieb) erhöht werden.

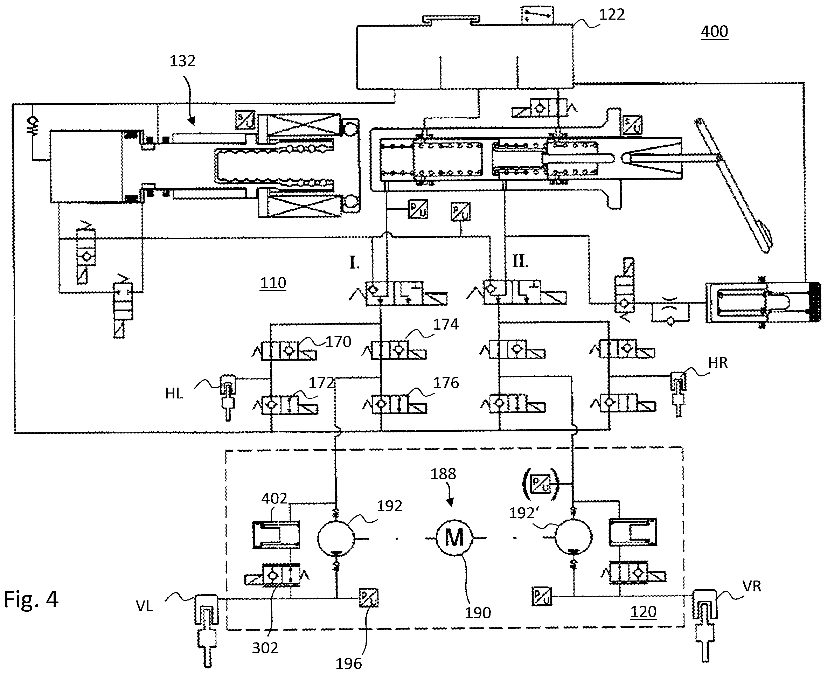

Bezug nehmend auf das vierte Ausführungsbeispiel einer Kraftfahrzeug-Bremsanlage 400 gemäß Fig. 4 besteht ein Unterschied zum dritten Ausführungsbeispiel darin, dass eine Komponente 402 vorgesehen ist, die zusätzliches Hydraulikfluidvolumen zum Ansaugen durch die Pumpe 192 bereitstellt. Hintergrund dieser Speicherung von zusätzlichem Hydraulikvolumen ist der Sachverhalt, dass der Ansaugpfad der Pumpe 192 durch die erste Funktionseinheit 110 vor allem bei tiefen Temperaturen nicht ausreichend schnell Hydraulikfluidvolumen zur Verfügung stellen könnte. Je nach Auslegung der Funktionseinheiten 110, 120 kann das Bereitstellen zusätzlichen Hydraulikfluidvolumens auch allgemein (ggf. temperaturunabhängig) zur Unterstützung eines schnellen Druckaufbaus an der Radbremse VL gewünscht sein.

Im vorliegenden Ausführungsbeispiel ist die Komponente 402 als Druckspeicher, konkret als federbelasteter Kolbenspeicher ausgebildet. Der Druckspeicher 402 könnte auch ein Membranspeicher oder ein mit einem Rollbalg abgedichteter Kolben sein.

Der Druckspeicher 402 ist zwischen dem Eingang der Pumpe 192 und der Hydraulikschnittstelle zur ersten Funktionseinheit 110 einerseits und dem Ventil 302 auf der anderen Seite durchströmbar angeordnet. Die durchströmbare Anordnung gestattet eine einfache Entlüftung und einen einfachen Wechsel des Hydraulikfluids im Rahmen eines regelmäßigen Service.

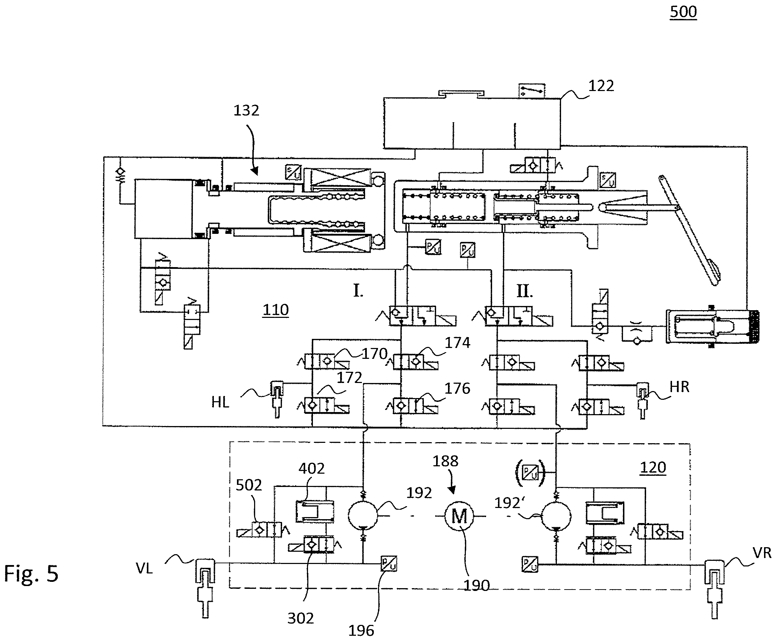

Jetzt Bezug nehmend auf das fünfte Ausführungsbeispiel einer Kraftfahrzeug-Bremsanlage 500 gemäß Fig. 5 besteht ein Unterschied zum vierten Ausführungsbeispiel darin, dass ein weiteres Bypass-Ventil 502 vorgesehen ist, welches parallel zum Bypass-Ventil 302 angeordnet ist und gemeinsam mit diesem geschaltet wird. Das im Ausführungsbeispiel als elektromagnetisch betätigtes 2/2-Wegeventil ausgebildete Ventil 502 nimmt im unbetätigten, also elektrisch nicht angesteuerten Zustand die in Fig. 5 dargestellte Grundstellung ein. Grundstellung heißt wie bei dem Ventil 302, dass das Ventil 502 seine Durchflussstellung einnimmt.

So kann über das geöffnete Ventil 502 auch bei fehlerhafterweise geschlossenem Bypass-Ventil 302 oder einem sperrenden Fehlerfall des durchflossenen Druckspeichers 402 noch Hydraulikdruck an der Radbremse VL abgebaut werden. Außerdem wird durch die beiden parallel geschalteten Ventile 302 und 502 der Durchflusswiderstand von der ersten Funktionseinheit 110 zur Radbremse VL verringert, so dass sich bei einem erforderlichen schnellen Druckaufbau an der Radbremse VL auch die so genannte "time to lock" dieser Radbremse VL verringert. Es versteht sich, dass dies in gleicher Weise bei der Radbremse VR der Fall ist. Allgemein gelten alle im Zusammenhang mit den Ausführungsbeispielen gemachten Aussagen bezüglich der Radbremse VL aufgrund der symmetrischen Auslegung der Bremssysteme 100 bis 500 auch für die Radbremse VR.

Bezug nehmend auf das sechste Ausführungsbeispiel einer Kraftfahrzeug-Bremsanlage 600 gemäß Fig. 6 ist beispielhaft für das fünfte Ausführungsbeispiel dargestellt, dass für die beiden Funktionseinheiten 110 und 120 separate Steuergeräte 180 bzw. 180' vorgesehen werden können (diese optionale Redundanz könnte natürlich auch bei allen anderen Ausführungsbeispielen implementiert sein).

Jedes dieser beiden Steuergeräte 180 und 180' ist in der Lage, eigenständig eine Bremsdruckregelung an der oder den entsprechenden Radbremse(n) durchzuführen. Dabei implementiert das der zweiten Funktionseinheit 120 zugeordnete Steuergerät 180' alle oder eine Teilmenge der Bremsdruckregelfunktionen des der ersten Funktionseinheit 110 zugeordneten Steuergeräts 180 (z. B. ASR, ESC, ABS, ACC, usw.).

Zusätzlich oder alternativ zum Vorsehen separater Steuergeräte 180, 180' könnten auch zwei redundante Energieversorgungen und/oder separate Energieversorgungen für die beiden Funktionseinheiten 110, 120 bereitgestellt werden. Diese Energieversorgungen können als zwei Akkumulatoren ausgebildet sein.

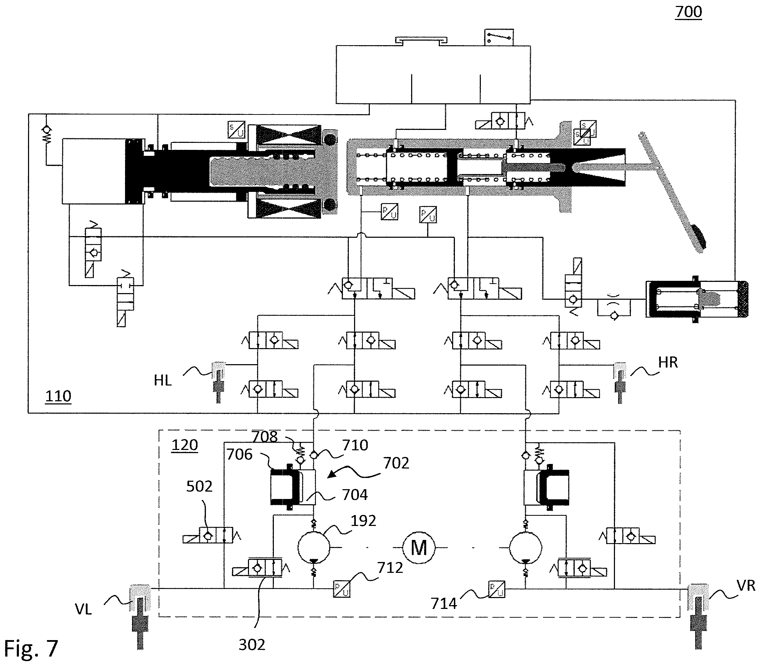

Nun Bezug nehmend auf das siebte Ausführungsbeispiel einer Kraftfahrzeug-Bremsanlage 700 gemäß Fig. 7 besteht ein Unterschied zum fünften Ausführungsbeispiel darin, dass anstatt des Druckspeichers 402 ein als Kolbenspeicher 702 ausgebildeter Fluidspeicher vorgesehen ist, der ohne Rückdruckfeder auskommt. Das siebte Ausführungsbeispiel ist ein erfindungsgemäßes Ausführungsbeispiel. Der Kolbenspeicher 702 ist in einem Fluidpfad zwischen der Pumpe 192 und dem Ventil 302 einerseits und der ersten Funktionseinheit 110 und dem zweiten Ventil 502 andererseits vorgesehen. Es ist darauf hinzuweisen, dass der Kolbenspeicher 702 auch bei dem Ausführungsbeispiel gemäß Fig. 4 anstatt des Druckspeichers 402 und stromaufwärts der Pumpe 192 sowie des Ventils 302 vorgesehen werden könnte.

Wie in Fig. 7 veranschaulicht, umfasst der Kolbenspeicher 702 einen Zylinder 704 und einen darin verschieblich aufgenommenen Kolben 706. Der Kolbenspeicher 702 ist mit einer Lippendichtung versehen, welche eine Abdichtung des Kolbens 706 gegen Atmosphärendruck zu übernehmen vermag. Wie bereits eingangs erwähnt, fehlt jedoch eine Rückdruckfeder oder ein ähnliches Element, um nach einem teilweisen oder vollständigen Entleeren des Kolbenspeichers 702 den Kolben 706 wieder in seine Speicherstellung zu drängen.

Die Speicherstellung des Kolbens 706 entspricht derjenigen Stellung, in welcher der Kolben 704 im Wesentlichen maximal mit Hydraulikfluid gefüllt ist. Beim Ansaugen von Hydraulikfluid durch die Pumpe 192 aus dem Zylinder 704 bewegt sich der Kolben 706 aus seiner Speicherstellung in eine Entnahmestellung. Um den Kolben 706 dann aus dieser Entnahmestellung wieder in seine Speicherstellung zurückzudrängen, ist gemäß dem Ausführungsbeispiel von Fig. 7 vorgesehen, dass ein von der druckbeaufschlagten Radbremse VL, VR in Richtung der ersten Funktionseinheit 110 zurückströmendes Hydraulikfluid den Kolben 706 in seine Speicherstellung zu drängen vermag.

Hierzu wird das Ventil 502 geschlossen und das Ventil 302 geöffnet, so dass das zurückströmende Hydraulikfluid in den Zylinder 704 gelangen kann. Dabei wird der Zylinder 706 solange entgegen Atmosphärendruck verschoben, bis eine mit dem Zylinder 706 kommunizierende Leitung zur ersten Funktionseinheit 110 freigegeben wird. In dieser Leitung ist ein federkraftbeaufschlagtes Rückschlagventil 708 vorgesehen, das ein Zurückströmen von Hydraulikfluid zur ersten Funktionseinheit 110 gestattet, aber in die entgegengesetzte Richtung sperrend wirkt. Der Öffnungsdruck zum Öffnen des Rückschlagventils 708 ist dabei vergleichsweise gering gewählt und beträgt weniger als 1 bar (z. B. 0,5 bar).

Parallel zu derjenigen Leitung zwischen dem Zylinder 704 und der ersten Funktionseinheit 110, in welcher das Rückschlagventil 708 aufgenommen ist, ist in einer weiteren Leitung zwischen der ersten Funktionseinheit 110 und dem Zylinder 704 ein weiteres Rückschlagventil 710 vorgesehen, das entgegengesetzt zum Rückschlagventil 708 angeordnet ist. Dieses zweite Rückschlagventil 710 gestattet ein Ansaugen von Hydraulikfluid mittels der Pumpe 192 aus der ersten Funktionseinheit 110 durch den Zylinder 704 hindurch (und wirkt in der entgegengesetzten Richtung sperrend). Die Leitung mit dem Rückschlagventil 710 ist bezüglich der Leitung mit dem Rückschlagventil 708 derart axial versetzt an dem Zylinder 704 angebracht, dass in jeder Stellung des Kolbens 706 ein Ansaugen von Hydraulikfluid aus der ersten Funktionseinheit 110 durch den Zylinder 704 hindurch möglich ist.

Das Rückschlagventil 710 ist entweder, wie in Fig. 7 gezeigt, ohne Schließfeder ausgebildet oder mit einer Schließfeder. Eine etwaige Schließfeder bewirkt einen äußerst geringen Öffnungsdruck von weniger als 0,5 bar, insbesondere weniger als 0,2 oder 0,1 bar.

Gemäß dem in Fig. 7 dargestellten Ausführungsbeispiel ist sichergestellt, dass der Kolben 706 bei Beendigung beispielsweise einer Notbremsfunktion stets wieder in seine Ausgangslage, also die Speicherstellung, zurückkehrt. Eine Druckregelung an den einzelnen Rädern kann auch bei dem Ausführungsbeispiel gemäß Fig. 7 durch eine sogenannte Abströmregelung erfolgen. Sind, wie in Fig. 7 gezeigt, entsprechende Raddrucksensoren 712, 714 in der zweiten Funktionseinheit 120 vorhanden, kann ein geschlossener Regelkreis realisiert sein. Sollen die Raddrucksensoren 712, 714 hingegen eingespart werden, wäre auch eine "Open Loop"-Regelung denkbar.

Bei einer Weiterbildung des Ausführungsbeispiels gemäß Fig. 7 (und der anderen hier beschriebenen Ausführungsbeispiele) kann die zweite Funktionseinheit 120 im Normalbremsbetrieb (also bei voller Funktionsfähigkeit der ersten Funktionseinheit 110) auch das "Blending" während einer regenerativen Bremsung übernehmen. Dieses Blending kann radindividuell durchgeführt werden. Auf diese Weise können die Dauerlaufanforderungen an die erste Funktionseinheit 110 erheblich herabgesetzt werden.

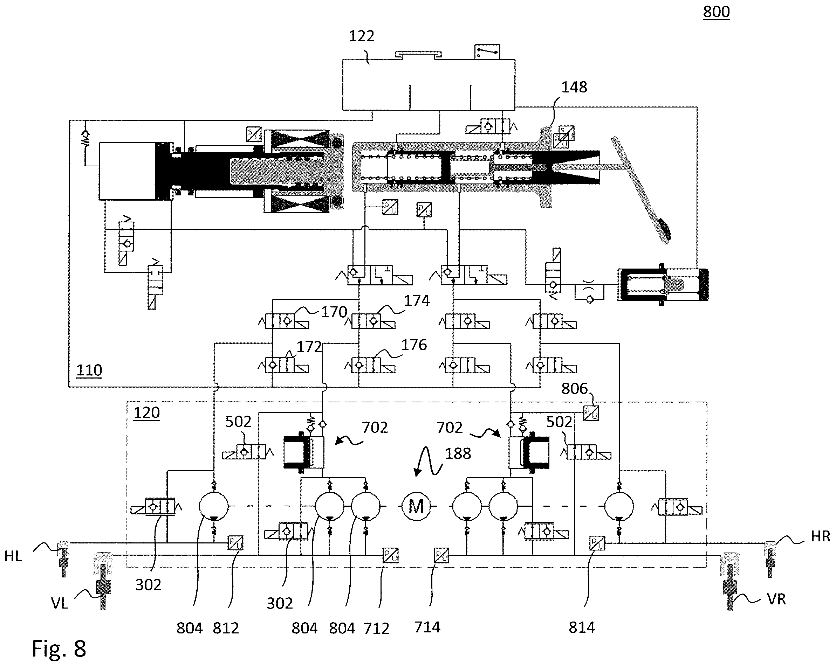

Bezug nehmend auf das achte Ausführungsbeispiel gemäß Fig. 8 besteht ein Unterschied zu den vorhergehenden Ausführungsbeispielen darin, dass alle vier Radbremsen VL, VR, HL und HR an die zweite Funktionseinheit 120 angeschlossen sind und die zweite Funktionseinheit 120 nun an allen diesen Radbremsen einen Bremsdruckaufbau (und insbesondere eine Bremsdruckregelung) durchzuführen vermag. Wie beispielhaft für die linke Hinterradbremse HL gezeigt, ist ein Hydraulikfluideingang der zweiten Funktionseinheit 120 für das linke Hinterrad HL zwischen einen Ausgang des Ventils 170 und einen Eingang des Ventils 172 gekoppelt (in Flussrichtung vom Druckerzeuger 132 zum Reservoir 122 hin gesehen). Es ist darauf hinzuweisen, dass auch die unter Bezugnahme auf die Fign. 1 bis 7 beschriebenen Ausführungsbeispiele auf diese Weise weitergebildet werden können.

Konkret ist nun pro Radbremse ein separater, sich zwischen der ersten Funktionseinheit 110 und der zweiten Funktionseinheit 120 erstreckender Fluidpfad mit einem entsprechendem Bypass-Ventil 302 für die jeweilige Pumpe vorgesehen. Dieses Ventil 302 nimmt im elektrisch nicht angesteuerten Zustand seine Durchflussstellung ein, so dass Hydraulikfluid von der ersten Funktionseinheit 110 zur entsprechenden Radbremse befördert werden und wieder zurück zur ersten Funktionseinheit 110 (und zum Reservoir 122) fließen kann.

Im Ausführungsbeispiel gemäß Fig. 8 umfasst der zweite Hydraulikdruckerzeuger 188 eine Mehrkolbenpumpe. Konkret ist die Mehrkolbenpumpe als Sechskolbenpumpe ausgebildet, wobei je zwei Kolben 804 für die beiden Vorderradbremsen VL, VR und je ein Kolben 804 für die beiden Hinterradbremsen HL, HR vorgesehen ist. Auf diese Weise kann an den Vorderradbremsen VL, VR ein besonders hoher Druckaufbaugradient erzielt werden. Zu diesem Zweck sind den beiden Vorderradbremsen VL, VR auch jeweils ein weiteres (optionales) Bypass-Ventil 502 sowie jeweils der oben erläuterte (optionale) Kolbenspeicher 702 zugeordnet.

Im Zusammenhang mit dem Ausführungsbeispiel gemäß Fig. 8 ist darauf hinzuweisen, dass dieses Ausführungsbeispiel in verschiedener Hinsicht abgewandelt werden könnte. So könnte beispielsweise die Sechskolbenpumpe durch eine Vierkolbenpumpe ersetzt werden, wobei dann jeder Radbremse genau ein Pumpenkolben 804 zugeordnet ist. Des Weiteren könnte auf das pro Vorderradbremse VL, VR vorgesehene Bypass-Ventil 502 auch verzichtet werden. Auch könnte der Kolbenspeicher 702 (wie bereits im Zusammenhang mit Fig. 7 erläutert) durch den Druckspeicher 402 gemäß Fig. 4 oder einen anderen Fluidspeicher ersetzt werden. Schließlich könnte anstatt einer Mehrkolbenpumpe auch eine entsprechende Mehrzahl von Zahnradpumpen oder eine zentrale Plunger-Anordnung vorgesehen werden.

Wie in Fig. 8 gezeigt, umfasst die zweite Funktionseinheit 120 pro Radbremse wiederum einen separaten Drucksensor 712, 714, 812, 814. Auf diesen Drucksensor kann verzichtet werden, wenn eine "Open-Loop"-Regelung in Kauf genommen werden kann.

Des Weiteren ist ein weiterer Drucksensor 806 eingangsseitig in der zweiten Funktionseinheit 120 vorgesehen. Konkret befindet sich der Drucksensor 806 im Ausführungsbeispiel gemäß Fig. 8 in der Fluidleitung zur rechten Vorderradbremse VR stromaufwärts des Bypass-Ventils 502 sowie des Kolbenspeichers 702 und der diesem Kolbenspeicher 702 zugeordneten Rückschlagventile. Der Drucksensor 806 ist dazu vorgesehen, eine Fahrerbremswunsch-Erkennung auch dann zu ermöglichen, wenn bei einem Ausfall der ersten Funktionseinheit 110 dort keine Fahrerwunscherkennung mehr möglich sein sollte. So kann mittels des Drucksensors 806 der vom Fahrer mittels des Hauptzylinders 138 aufgebaute Hydraulikdruck erkannt werden. Der solchermaßen erkannte Hydraulikdruck kann zur Ansteuerung des zweiten Bremsdruckerzeugers 188 verwendet werden. Auch bei den anderen hier vorgestellten Ausführungsbeispielen könnte der weitere Drucksensor 806 in der jeweiligen zweiten Funktionseinheit 120 vorgesehen werden.

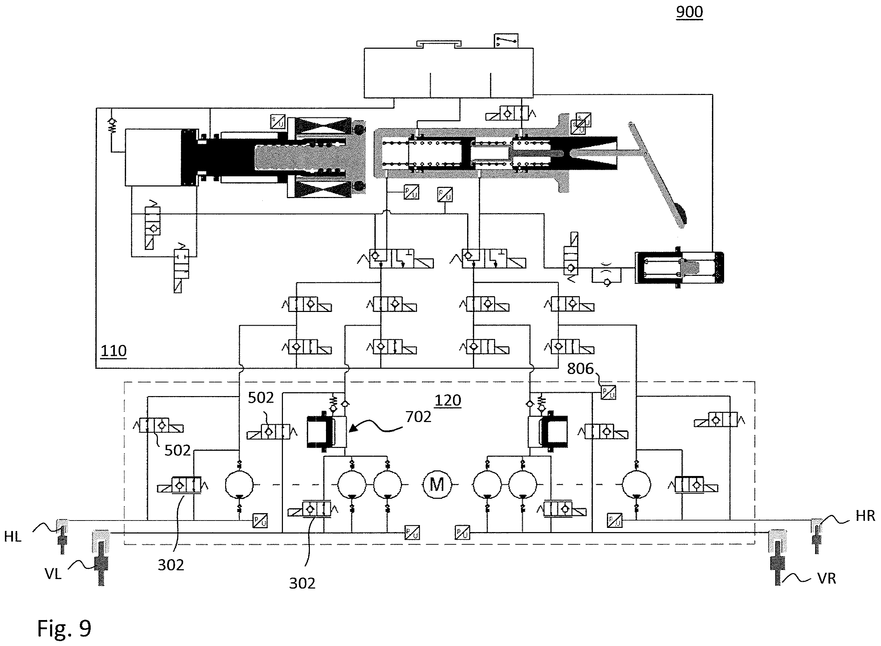

Bei dem neunten Ausführungsbeispiel einer Kraftfahrzeug-Bremsanlage 900 gemäß Fig. 9 besteht ein Unterschied zum achten Ausführungsbeispiel gemäß Fig. 8 darin, dass nun auch für jede der beiden Hinterradbremsen HL, HR ein Bypass-Ventil 502 vorgesehen ist. Es sei hier auf die Beschreibung dieses Bypass-Ventils 502 im Zusammenhang mit dem fünften Ausführungsbeispiel verwiesen.

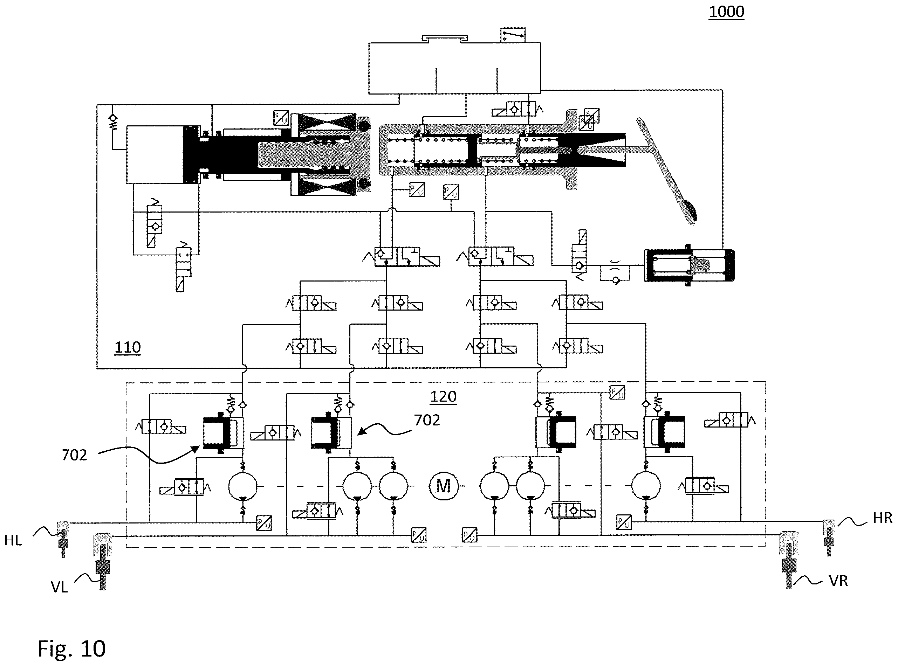

Nun Bezug nehmend auf das zehnte Ausführungsbeispiel einer Kraftfahrzeug-Bremsanlage 1000 gemäß Fig. 10 besteht ein Unterschied zum neunten Ausführungsbeispiel darin, dass nun auch für jede der beiden Hinterradbremsen HL, HR ein Volumenspeicher und konkret ein Kolbenspeicher 702 mit der unter Bezugnahme auf das siebte Ausführungsbeispiel gemäß Fig. 7 geschilderten Funktionalität vorgesehen ist. Auf diese Weise kann im Fall einer Notbremsung ein rascher Druckaufbau mit einem hohem Druckaufbaugradienten auch an den Hinterradbremsen HL, HR gewährleistet werden.

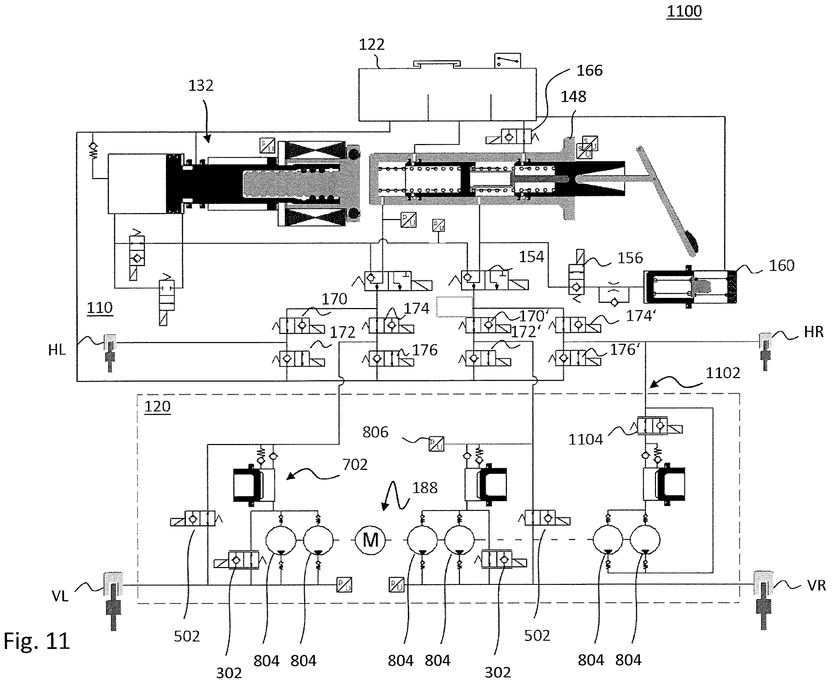

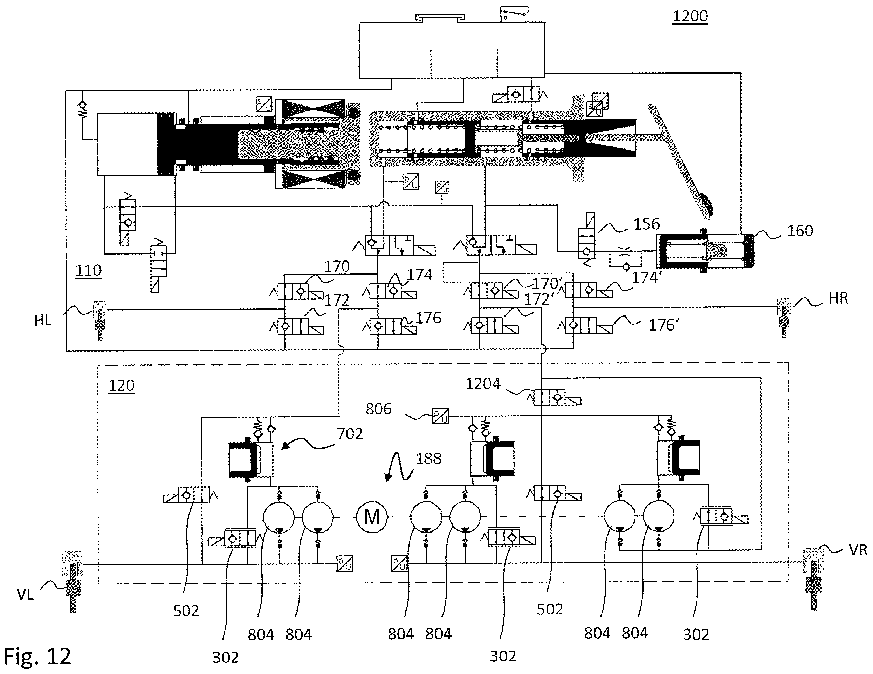

Bezug nehmend auf das elfte Ausführungsbeispiel einer Kraftfahrzeug-Bremsanlage 1100 gemäß Fig. 11 besteht eine Gemeinsamkeit mit den Ausführungsbeispielen gemäß den Fign. 8 bis 10 darin, dass die zweite Funktionseinheit 120 an allen vier Radbremsen des Kraftfahrzeugs einen Bremsdruckaufbau durchzuführen vermag. Im Unterschied zu den Ausführungsbeispielen gemäß den Fign. 8 bis 10 sind die Hinterradbremsen HL, HR nun jedoch nicht mehr an die zweite Funktionseinheit 120 angeschlossen, sondern an die erste Funktionseinheit 110 (in Übereinstimmung mit den Ausführungsbeispielen gemäß den Fign. 1 bis 7). Genau so verhält es sich auch bei der Kraftfahrzeug-Bremsanlage 1200 gemäß dem in Fig. 12 dargestellten zwölften Ausführungsbeispiel.

Bei den Ausführungsbeispielen gemäß den Fign. 11 und 12 wurde berücksichtigt, dass die erste Funktionseinheit 110 von unterschiedlichen Ausfallsszenarien betroffen sein kann. Relativ unwahrscheinlich ist hier ein kompletter Ausfall der ersten Funktionseinheit 110, einschließlich aller Ventiltreiber für die in der ersten Funktionseinheit 110 verbauten Ventile. Immer noch unwahrscheinlich, jedoch etwas wahrscheinlicher ist ein Ausfall der Motoransteuerung für den ersten Bremsdruckerzeuger 132.

Die Bremsanlagen 1100 und 1200 sind aus diesem Grund derart konfiguriert, dass eine gestufte Degradierung der Bremsfunktionalitäten möglich ist. Für den äußerst unwahrscheinlichen Fall eines Komplettausfalls der ersten Funktionseinheit 110 ist immer noch ein Bremseingriff mittels der zweiten Funktionseinheit 120 an den Vorderradbremsen VL, VR möglich. Für einen eher wahrscheinlichen Ausfall lediglich der Motoransteuerung oder einer anderen Komponente des ersten Bremsdruckerzeugers 132 bei gewährleisteter Funktionalität der in der ersten Funktionseinheit 110 verbauten Ventiltreiber ist hingegen ein Bremseingriff an allen vier Radbremsen mittels des zweiten Hydraulikdruckerzeugers 188 möglich.

Der maßgebliche Unterschied zwischen den Bremsanlagen 1100 und 1200 liegt darin, dass bei der Bremsanlage 1100 drei Fluidpfade zwischen der ersten Funktionseinheit 110 und der zweiten Funktionseinheit 120 vorgesehen sind, während bei der Bremsanlage 1200 lediglich zwei solche Fluidpfade vorhanden sein müssen. Konkret kann bei der Bremsanlage 1200 der in Fig. 11 eingezeichnete Fluidpfad 1102 entfallen. Selbstverständlich könnte auch für jede der beiden Hinterradbremsen HL, HR ein separater Fluidpfad vorgesehen werden. In diesem Fall könnte die in der zweiten Funktionseinheit 120 die Hinterradbremsen HL, HR dargestellte Hydraulikbaugruppe einfach "gespiegelt" werden (wobei jeder dieser beiden Hydraulikbaugruppen dann lediglich ein einzelner Pumpenkolben 804 zugeordnet sein könnte).

Bei den Bremsanlagen 1100 und 1200 kommt wiederum eine Sechskolbenpumpe zum Einsatz, wobei ein separater Satz aus zwei Pumpenkolben 804 jeder der beiden Vorderradbremsen VL, VR zugeordnet ist, während den beiden Hinterradbremsen HL, HR ein dritter Satz aus zwei Pumpenkolben 804 zugeordnet ist. Natürlich könnte jedes dieser beiden Kolbenpaare bei einer Dreikolbenpumpe auch durch einen einzigen Kolben 804 ersetzt werden. Erneut ist darauf hinzuweisen, dass auch die Kolbenspeicher 702 entfallen oder durch den in Fig. 4 gezeigten Druckspeicher 402 ersetzt werden könnten. Auch auf die Bypass-Ventile 502 könnte verzichtet werden.

Bei einem Ausfall der ersten Funktionseinheit 110, von welchem auch die Ventiltreiber für die in der ersten Funktionseinheit 110 verbauten Ventile betroffen sind, kann mittels der zweiten Funktionseinheit 120 noch immer ein Bremsdruckaufbau an den beiden Vorderradbremsen VL, VR erfolgen. Bei einem Betrieb des zweiten Bremsdruckerzeugers 188 laufen die den Hinterradbremsen HL, HR zugeordneten Pumpenkolben 804 nur leer mit. Zu diesem Zweck wird das stromaufwärts des Kolbenspeichers 702 im Hydraulikpfad 1102 angeordnete Ventil 1104 geöffnet, so dass die den entsprechenden Pumpenkolben 804 zugeordnete Eingänge mit den entsprechenden Ausgängen kurzgeschlossen werden. Bei dem Ventil 1104 handelt es sich im Ausführungsbeispiel um ein elektromagnetisch betätigtes 2/2-Wegeventil, das im unbetätigten, also elektrisch nicht angesteuerten Zustand die in Fig. 11 dargestellte Grundstellung einnimmt. Grundstellung heißt hier, dass das Ventil 1102 sich in einer Durchflussstellung befindet.

Bei einem lediglich teilweisen Ausfalls der ersten Funktionseinheit 110, von dem beispielsweise nur eine Motorenansteuerung des ersten Hydraulikdruckerzeugers 132 aber nicht die übrige Elektronik der ersten Funktionseinheit 110 (einschließlich der Ventiltreiber) betroffen ist, kann hingegen mittels des zweiten Hydraulikdruckerzeugers 188 auch an den beiden Hinterradbremsen HL, HR ein Bremsdruckaufbau (und insbesondere eine Bremsdruckregelung) erfolgen. Dazu werden in der ersten Funktionseinheit 110 die den Vorderradbremsen VL, VR zugeordnete Ventile 174 sowie 170', das dem Simulator 160 zugeordnete Ventil 156 sowie das zwischen dem Hauptzylinder 148 und dem Reservoir 122 angeordnete Ventil 166 angesteuert und damit geschlossen. Die anderen in der ersten Funktionseinheit 110 verbauten Ventile, insbesondere die Ventile 170, 176, 172' und 174', können hingegen in ihrer in Fig. 11 dargestellten Grundstellung verbleiben. Ferner wird das Ventil 1104 geschlossen, um über die den beiden Hinterradbremsen HL, HR zugeordneten Pumpenkolben 804 einen Hydraulikdruck an der rechten Hinterradbremse HR sowie über die Primärkammer und Sekundärkammer des Hauptzylinders 148 auch an der linken Hinterradbremse HL aufzubauen.

Wie in Fig. 12 dargestellt, kann die Anzahl der Verbindungsleitungen zwischen der ersten Funktionseinheit 110 und der zweiten Funktionseinheit 120 auf lediglich zwei Leitungen reduziert werden. Es wird dann in der zweiten Funktionseinheit 120 ein weiteres Absperrventil 1204 vorgesehen. Das im Ausführungsbeispiel als elektromagnetisch betätigtes 2/2-Wegeventil ausgebildete Ventil 1204 nimmt im unbetätigten, also elektrisch nicht angesteuerten Zustand die in Fig. 12 dargestellte Grundstellung (d.h. seine Durchflussstellung) ein.

Soll mittels des zweiten Hydraulikdruckerzeugers 188 an den Hinterradbremsen HL, HR ein Hydraulikdruck erzeugt werden, wird das Ventil 1204 in seine geschlossene Stellung gebracht, so dass bei einem Druckaufbau mit den den Hinterradbremsen HL, HR zugeordneten Pumpenkolben 804 kein Rückströmen des Hydraulikfluids in den entsprechenden Speicherkolben 702 oder in andere Bereiche der zweiten Funktionseinheit 120 gestattet ist. Bei ansonsten intakter Ansteuerelektronik der ersten Funktionseinheit 110 steht ja auch noch immer das Eingangswegsignal zur Verfügung (vgl. Sensor 182 in Fig. 1). Daher kann beim Einbremsen des Fahrers bei aktivierter zweiter Funktionseinheit 120 wesentlich früher reagiert werden als bei einem Komplettausfall mit einem Eingriff lediglich an den beiden Vorderradbremsen VL, VR, bei welchen lediglich auf das Signal des in der zweiten Funktionseinheit 120 verbauten Drucksensors 806 zurückgegriffen werden kann.

Zur Service-Entlüftung des den beiden Hinterradbremsen HL, HR zugeordneten dritten Pumpenblocks kann die zweite Funktionseinheit 120 an geeigneter Stelle mit einer Entlüftungsschraube versehen werden. Zusätzlich oder alternativ hierzu kann eine geeignete Entlüftungsroutine vorgesehen werden, welche eine Interaktion zwischen dem ersten Hydraulikdruckerzeuger 132 und dem diese Pumpenblock zugeordneten Speicherkolben 702 (oder anderweitigen Volumenspeicher) ermöglicht. Auf diese Weise kann eine Entlüftung auch über die Entlüfterschraube der nächstliegenden Hinterrad- oder auch Vorderradbremse erfolgen.

Allgemein bietet die durch die zweite Funktionseinheit 120 geschaffene Redundanz eine sicherheitstechnische Verbesserung, welche die hier vorgestellten Bremsanlagen 100 - 1200 beispielsweise auch für Anwendungsfälle des autonomen oder teilautonomen Fahrens geeignet macht (z. B. in einem RCP-Modus). Insbesondere kann bei Ausfall der ersten Funktionseinheit 110 und einem ausbleibenden Fahrereingriff am (optionalen) Bremspedal 130 das Fahrzeug noch immer mittels der zweiten Funktionseinheit 120 sicher, also einschließlich einer ggf. erforderlichen Bremsdruckregelung, zum Stillstand gebracht werden.

Ein Ausführungsbeispiel eines Betriebsverfahrens für die Bremsanlagen 100 - 1200 umfasst den Schritt des Erfassens eines Erfordernisses für eine Bremsdruckregelung mittels der zweiten Funktionseinheit 120 bei mangelnder Funktionsfähigkeit der ersten Funktionseinheit 110. Auf dieses Erfassen hin wird dann eine Bremsdruckregelung durch die zweite Funktionseinheit 120 an wenigstens einer der beiden Radbremsen VL du VR durchgeführt.

So kann etwa bei Ausfall einer separaten Energieversorgung für die erste Funktionseinheit 110 (insbesondere für den elektrischen Druckerzeuger 132) eine mangelnde Funktionsfähigkeit der ersten Funktionseinheit 110 erkannt werden. Wenn in diesem Zustand das Erfordernis einer Bremsdruckregelung an einer der Radbremsen VL und VR erfasst wird (z. B. die Notwendigkeit eines ESC-Eingriffs), so erfolgt diese dann mittels der zweiten Funktionseinheit 120, für die eine getrennte Energieversorgung vorgesehen ist.

In einem weiteren Beispiel kann der Ausfall der ersten Funktionseinheit 110 (z. B. ein mechanischer Ausfall des Getriebes 142 des Druckerzeugers 132) dazu führen, dass das Fahrzeug unverzüglich bis zum Stillstand abgebremst werden muss. Falls während dieses Abbremsens eine ABS-Regelung erforderlich wird, wird diese von der zweiten Funktionseinheit 120 übernommen.

Es versteht sich, dass viele weitere Szenarien existieren, in denen die hier vorgestellte Fahrzeug-Bremsanlagen in vorteilhafter Weise zum Einsatz gelangen können. Ferner versteht sich, dass das im Zusammenhang mit dem ersten Ausführungsbeispiel beschriebene Prüfverfahren jedenfalls für den Zweck des Prüfens des Hydraulikdruckaufbaus auch bei den anderen Ausführungsbeispielen Verwendung finden kann, da auch dort ein entsprechender Drucksensor im Bereich der zweiten Funktionseinheit 120 sowie die Möglichkeit des Abkoppelns dieser Funktionseinheit 120 von der ersten Funktionseinheit 110 vorhanden sind.

## Patentansprüche

1. Hydraulische Kraftfahrzeug-Bremsanlage mit redundanter Bremsdruckregelung, umfassend:
eine erste Funktionseinheit (110) mit
- wenigstens einem ersten elektrischen Bremsdruckerzeuger (132), der ausgebildet ist, an einer Mehrzahl von Radbremsen (VL, VR, HL, HR) jeweils einen Bremsdruck zu erzeugen;
- einer ersten Ventilanordnung (174, 176) pro Radbremse (VL), wobei die erste Ventilanordnung (174, 176) für eine Bremsdruckregelung an der entsprechenden Radbremse (VL) ansteuerbar ist, um eine der ersten Ventilanordnung (174, 176) zugeordnete Radbremse (VL) wahlweise mit dem ersten Bremsdruckerzeuger (132) oder einem ersten drucklosen Reservoir (122) für Hydraulikfluid zu koppeln; und
eine zweite Funktionseinheit (120) mit
- wenigstens einem zweiten elektrischen Bremsdruckerzeuger (188), der ausgebildet ist, an einer Untermenge der Radbremsen (VL, VR) jeweils einen Bremsdruck zu erzeugen, wobei ein Ausgang des zweiten Bremsdruckerzeugers (188) aus Sicht des ersten Bremsdruckerzeugers (132) stromabwärts der der entsprechenden Radbremse (VL) zugeordneten ersten Ventilanordnung (174, 176) angeordnet ist;
- wobei die zweite Funktionseinheit (120) ausgelegt ist, in redundanter Weise zur ersten Funktionseinheit (110) eine Bremsdruckregelung an jeder Radbremse (VL, VR) der Untermenge durchzuführen;
- **dadurch gekennzeichnet dass** die zweite Funktionseinheit (120) wenigstens einen eingangsseitig des zweiten Bremsdruckerzeugers (188) vorgesehenen Fluidspeicher (702) umfasst; wobei
- der Fluidspeicher als Kolbenspeicher (702) mit einem Zylinder (704) und einem darin verschieblich aufgenommenen Kolben (706) ausgebildet ist, wobei der Kolben (706) eine Speicherstellung bei befülltem Zylinder (704) aufweist und wobei der Kolbenspeicher (702) in einem Fluidpfad zwischen einer der Radbremsen der Untermenge und der ersten Funktionseinheit (110) derart angeordnet ist, dass ein von der Radbremse in Richtung der ersten Funktionseinheit (110) strömendes Hydraulikfluid den Kolben (706) in seine Speicherstellung zu drängen vermag; und wobei
- ein erstes Rückschlagventil (708) zwischen dem Zylinder (704) und der ersten Funktionseinheit (110) vorgesehen ist, welches ein Strömen von Hydraulikfluid aus dem Zylinder (704) in die erste Funktionseinheit (110) gestattet, wobei das erste Rückschlagventil (708) in die entgegengesetzte Richtung sperrend wirkt.

2. Kraftfahrzeug-Bremsanlage nach Anspruch 1, wobei
sowohl ein Eingang des ersten Bremsdruckerzeugers (132) als auch ein Eingang des zweiten Bremsdruckerzeugers (188) mit dem ersten drucklosen Reservoir gekoppelt oder koppelbar sind.

3. Kraftfahrzeug-Bremsanlage nach Anspruch 1, wobei
die zweite Funktionseinheit (120) ein zweites druckloses Reservoir (124) für Hydraulikfluid umfasst und ein Eingang des zweiten Bremsdruckerzeugers (188) mit dem zweiten drucklosen Reservoir (124) gekoppelt oder koppelbar ist; und wobei
ein Eingang des ersten Bremsdruckerzeugers (132) mit dem ersten drucklosen Reservoir (122) gekoppelt oder koppelbar ist.

4. Kraftfahrzeug-Bremsanlage nach einem der vorhergehenden Ansprüche, wobei
die zweite Funktionseinheit (120) für die Durchführung der Bremsdruckregelung ferner eine zweite Ventilanordnung (198) pro Radbremse (VL) der Untermenge umfasst, wobei die zweite Ventilanordnung (198) für die Bremsdruckregelung an der entsprechenden Radbremse (VL) ansteuerbar ist.

5. Kraftfahrzeug-Bremsanlage nach den Ansprüchen 3 und 4, wobei
die zweite Ventilanordnung (198) zwischen dem Ausgang des zweiten Bremsdruckerzeugers (188) und dem zweiten drucklosen Reservoir (124) vorgesehen ist.

6. Kraftfahrzeug-Bremsanlage nach Anspruch 4, wobei
die zweite Ventilanordnung eine erste Ventileinheit (216) umfasst, um die der zweiten Ventilanordnung zugeordnete Radbremse (VL) zur Bremsdruckerhöhung wahlweise mit dem zweiten Druckerzeuger (188) zu koppeln, und eine zweite Ventileinheit (218), um wahlweise Bremsdruck an der der zweiten Ventilanordnung zugeordnete Radbremse (VL) abzubauen.

7. Kraftfahrzeug-Bremsanlage nach Anspruch 4, wobei
der zweite elektrische Bremsdruckerzeuger (188) in einer Fluidleitung zwischen der einer Radbremse (VL) zugeordneten ersten Ventilanordnung (174, 176) und der entsprechenden Radbremse (VL) derart angeordnet ist, dass der Ausgang des zweiten Bremsdruckerzeugers (188) zur Radbremse (VL) hin gerichtet ist und ein oder der Eingang des zweiten Bremsdruckerzeugers (188) zur entsprechenden ersten Ventilanordnung (174, 176) hin gerichtet ist, wobei zusätzlich die der entsprechenden Radbremse (VL) zugeordnete zweite Ventilanordnung insbesondere eine parallel zum zweiten Bremsdruckerzeuger (188) geschaltete erste Ventileinheit (302) umfasst, und wobei zusätzlich hierzu die der entsprechenden Radbremse (VL) zugeordnete zweite Ventilanordnung insbesondere eine parallel zur ersten Ventileinheit (302) geschaltete zweite Ventileinheit (502) umfasst, und wobei außerdem zusätzlich die erste und, falls vorhanden, die zweite Ventileinheit (302, 502) insbesondere ausgelegt ist, bei Betrieb des ersten Bremsdruckerzeugers (132) eine Durchlass-Stellung einzunehmen oder bei Betrieb des zweiten Bremsdruckerzeugers (188) eine Sperr-Stellung zumindest entgegen einer Förderrichtung des zweiten Bremsdruckerzeugers (188) einzunehmen.

8. Kraftfahrzeug-Bremsanlage nach einem der vorhergehenden Ansprüche, wobei
die Radbremsen Vorderradbremsen (VL, VR) und Hinterradbremsen (HL, HR) umfassen, wobei die Vorderradbremsen (VL, VR) an die zweite Funktionseinheit (120) und die Hinterradbremsen (HR, HL) an die erste Funktionseinheit (110) angeschlossen sind.

9. Kraftfahrzeug-Bremsanlage nach einem der vorhergehenden Ansprüche, wobei
das erste Rückschlagventil (708) federkraftbeaufschlagt ist, wobei ein Öffnungsdruck zur Öffnung des ersten Rückschlagventils (708) weniger als 1 bar beträgt; und/oder
ein zweites Rückschlagventil (710) vorgesehen ist, welches ein Ansaugen von Hydraulikfluid mittels des zweiten Bremsdruckerzeugers (188) aus der oder über die erste Funktionseinheit (110) gestattet, wobei das zweite Rückschlagventil (710) in die entgegengesetzte Richtung sperrend wirkt; und/oder
der Kolbenspeicher (702) ohne elastisches Element zur selbsttätigen Überführung des Kolbens (704) in seine Speicherstellung ausgebildet ist; und/oder
die zweite Funktionseinheit (120) ferner eine Trennkolbenanordnung (194) zwischen dem Ausgang des zweiten Bremsdruckerzeugers (188) und der entsprechenden Radbremse (VL) der Untermenge umfasst, wobei zusätzlich hierzu die Trennkolbenanordnung (194) insbesondere ausgebildet ist, den ersten Bremsdruckerzeuger (132) in dessen Betrieb fluidisch mit der entsprechenden Radbremse (VL) der Untermenge zu koppeln und bei einem Betrieb des zweiten Bremsdruckerzeugers (188) den ersten Bremsdruckerzeuger (132) von der entsprechenden Radbremse fluidisch abzukoppeln.

10. Kraftfahrzeug-Bremsanlage nach einem der vorhergehenden Ansprüche, wobei
die erste Funktionseinheit (110) ferner ein erstes Steuergerät (180) umfasst zur Ansteuerung des ersten Bremsdruckerzeugers (132) bei einer Bremsdruckregelung der ersten Funktionseinheit (110) und die zweite Funktionseinheit (120) ferner ein zweites Steuergerät (180') umfasst zur Ansteuerung des zweiten Bremsdruckerzeugers (188) bei einer Bremsdruckregelung der zweiten Funktionseinheit (120); und/oder
jede erste Ventilanordnung (174, 176) eine dritte Ventileinheit umfasst, um die der ersten Ventilanordnung (174, 176) zugeordnete Radbremse (VL) wahlweise mit dem ersten Bremsdruckerzeuger (132) zu koppeln, und eine vierte Ventileinheit, um wahlweise Bremsdruck an der der zweiten Ventilanordnung zugeordnete Radbremse (VL) abzubauen; und/oder
die erste Funktionseinheit (110) ferner umfasst
- einen mit einem Bremspedal (130) koppelbaren Hauptzylinder (148); und
- eine Umschalteinrichtung (152, 154), um wahlweise den ersten Bremsdruckerzeuger (132) oder den Hauptzylinder (148) mit wenigstens einer der Radbremsen (VL, VR, HL, HR) zu koppeln.

11. Kraftfahrzeug-Bremsanlage nach einem der vorhergehenden Ansprüche, wobei
die Untermenge der Radbremsen (VL, VR) ausschließlich den Vorderrädern des Kraftfahrzeugs zugeordnet ist; und/oder
der erste Bremsdruckerzeuger (132) eine mittels eines Elektromotors (140) betätigbare, doppelwirkende Zylinder-Kolben-Anordnung (134) umfasst; und/oder
die zweite Funktionseinheit (120) derart ausgebildet ist, dass der zweite Bremsdruckerzeuger (188) an allen Radbremsen des Kraftfahrzeugs einen Bremsdruckaufbau durchzuführen vermag; und/oder
der zweite Bremsdruckerzeuger (188) eine Mehrkolbenpumpe umfasst, wobei jeder der Radbremsen der Untermenge der Radbremsen wenigstens ein Kolben (804) der Mehrkolbenpumpe (802) zugeordnet ist, wobei zusätzlich hierzu die Mehrkolbenpumpe insbesondere wenigstens vier Kolben (804) und die Bremsanlage zwei Vorderradbremsen (VL, VR) und zwei Hinterradbremsen (HL, HR) umfasst, wobei jeder Vorderradbremse (VL, VR) und jeder Hinterradbremse (HL, HR) wenigstens ein Kolben (804) zugeordnet ist, wobei außerdem zusätzlich hierzu die beiden Vorderradbremsen (VL, VR) und die beiden Hinterradbremsen (HL, HR) insbesondere an die zweite Funktionseinheit (120) angeschlossen sind.

12. Kraftfahrzeug-Bremsanlage nach einem der vorhergehenden Ansprüche, wobei
pro Radbremse ein separater, sich zwischen der ersten Funktionseinheit (110) und der zweiten Funktionseinheit (120) erstreckender Fluidpfad vorgesehen ist.

13. Verfahren zum Betreiben einer hydraulischen Kraftfahrzeug-Bremsanlage nach einem der vorhergehenden Ansprüche, wobei das Verfahren die folgende Schritte umfasst:
- Erfassen eines Erfordernisses für eine Bremsdruckregelung bei mangelnder Funktionsfähigkeit der ersten Funktionseinheit (110);
- Durchführen, auf das Erfassen hin, einer Bremsdruckregelung durch die zweite Funktionseinheit (120) an wenigstens einer Radbremse (VL, VR) der Untermenge; und
- Drängen des Kolbens (706) in seine Speicherstellung mittels von der Radbremse in Richtung der ersten Funktionseinheit (110) strömenden Hydraulikfluids, bis das erste Rückschlagventil (708) ein Strömen von Hydraulikfluid aus dem Zylinder in die erste Funktionseinheit (110) gestattet.

14. Verfahren zum Prüfen der zweiten Funktionseinheit (120) der elektrohydraulischen Kraftfahrzeug-Bremsanlage (100 - 600) nach einem der Ansprüche 1 bis 12, umfassend die Schritte:
hydraulisches Abkoppeln der zweiten Funktionseinheit (120) von der ersten Funktionseinheit (110);
Betätigen des zweiten Druckerzeugers (188) zum Aufbauen eines Hydraulikdruckes an wenigstens einer Radbremse (VL, VR) der Untermenge;
Ermitteln eines oder mehrerer der folgenden Parameter: eines an der entsprechenden Radbremse (VL, VR) erzeugten Hydraulikdruckes und, falls die Kraftfahrzeug-Bremsanlage zumindest die zusätzlichen Merkmale des Anspruchs 3 aufweist, ein Füllstand des der zweiten Funktionseinheit (120) zugeordneten drucklosen Reservoirs (124) für Hydraulikfluid;
Prüfen der Funktionsfähigkeit der zweiten Funktionseinheit (120) auf der Grundlage des wenigstens einen ermittelten Parameters.

15. Kraftfahrzeug-Steuergerät (180 oder 180') oder Steuergerätesystem (180, 180'), wobei das Steuergerät oder Steuergerätsystem wenigstens einen Prozessor und wenigstens einen Speicher aufweist und wobei der Speicher Programmcode umfasst, der, wenn er von dem Prozessor ausgeführt wird, die Durchführung der Schritte des Verfahrens nach Anspruch 13 oder 14 bewirken.

## Claims

1. Hydraulic motor vehicle brake system with redundant brake pressure regulation, comprising:
a first functional unit (110) having
- at least one first electrical brake pressure generator (132) which is designed to generate a brake pressure at each of a plurality of wheel brakes (VL, VR, HL, HR);
- a first valve arrangement (174, 176) for each wheel brake (VL), wherein the first valve arrangement (174, 176) can be actuated for brake pressure regulation at the corresponding wheel brake (VL) in order to selectively couple a first wheel brake (VL) associated with the first valve arrangement (174, 176) to the first brake pressure generator (132) or to a first unpressurized reservoir (122) for hydraulic fluid; and
a second functional unit (120) having
- at least one second electrical brake pressure generator (188) which is designed to generate a brake pressure at each of a subset of the wheel brakes (VL, VR), wherein an output of the second brake pressure generator (188) is arranged downstream, as seen from the first brake pressure generator (132), of the first valve arrangement (174, 176) associated with the corresponding wheel brake (VL);
- wherein the second functional unit (120) is designed to carry out brake pressure regulation at each wheel brake (VL, VR) of the subset in a redundant manner with respect to the first functional unit (110);
**characterized in that**
the second functional unit (120) comprises at least one fluid accumulator (702) provided at the input end of the second brake pressure generator (188); wherein
- the fluid accumulator is in the form of a piston-type accumulator (702) with a cylinder (704) and a piston (706) displaceably accommodated therein, wherein the piston (706) is in an accumulator position when the cylinder (704) is filled and wherein the piston-type accumulator (702) is arranged in a fluid path between one of the wheel brakes of the subset and the first functional unit (110) in such a way that a hydraulic fluid flowing from the wheel brake in the direction of the first functional unit (110) is capable of forcing the piston (706) into its accumulator position; and wherein
- a first non-return valve (708) is provided between the cylinder (704) and the first functional unit (110) and permits hydraulic fluid to flow out of the cylinder (704) into the first functional unit (110), wherein the first non-return valve (708) has a blocking action in the opposite direction.

2. Motor vehicle brake system according to Claim 1, wherein
both an input of the first brake pressure generator (132) and an input of the second brake pressure generator (188) are coupled or can be coupled to the first unpressurized reservoir.

3. Motor vehicle brake system according to Claim 1, wherein
the second functional unit (120) comprises a second unpressurized reservoir (124) for hydraulic fluid and an input of the second brake pressure generator (188) is coupled or can be coupled to the second unpressurized reservoir (124); and wherein
an input of the first brake pressure generator (132) is coupled or can be coupled to the first unpressurized reservoir (122).

4. Motor vehicle brake system according to one of the preceding claims, wherein
the second functional unit (120), for carrying out the brake pressure regulation, further comprises a second valve arrangement (198) for each wheel brake (VL) of the subset, wherein the second valve arrangement (198) can be actuated for the brake pressure regulation at the corresponding wheel brake (VL).

5. Motor vehicle brake system according to Claims 3 and 4, wherein
the second valve arrangement (198) is provided between the output of the second brake pressure generator (188) and the second unpressurized reservoir (124).

6. Motor vehicle brake system according to Claim 4, wherein
the second valve arrangement comprises a first valve unit (216) in order to selectively couple the wheel brake (VL) associated with the second valve arrangement to the second pressure generator (188) for increasing the brake pressure and comprises a second valve unit (218) in order to selectively reduce brake pressure at the wheel brake (VL) associated with the second valve arrangement.

7. Motor vehicle brake system according to Claim 4, wherein
the second electrical brake pressure generator (188) is arranged in a fluid line between the first valve arrangement (174, 176) associated with a wheel brake (VL) and the corresponding wheel brake (VL) in such a way that the output of the second brake pressure generator (188) is directed towards the wheel brake (VL) and a or the input of the second brake pressure generator (188) is directed towards the corresponding first valve arrangement (174, 176), wherein additionally the second valve arrangement associated with the corresponding wheel brake (VL) in particular comprises a first valve unit (302) connected in parallel with the second brake pressure generator (188), and wherein additionally to this the second valve arrangement associated with the corresponding wheel brake (VL) in particular comprises a second valve unit (502) connected in parallel with the first valve unit (302), and wherein furthermore additionally the first and, if present, the second valve unit (302, 502) are/is in particular designed to assume a passage position during operation of the first brake pressure generator (132) or to assume a blocking position at least against a conveying direction of the second brake pressure generator (188) during operation of the second brake pressure generator (188).

8. Motor vehicle brake system according to one of the preceding claims, wherein
the wheel brakes comprise front wheel brakes (VL, VR) and rear wheel brakes (HL, HR), wherein the front wheel brakes (VL, VR) are connected to the second functional unit (120) and the rear wheel brakes (HR, HL) are connected to the first functional unit (110).

9. Motor vehicle brake system according to one of the preceding claims, wherein
the first non-return valve (708) has spring force applied to it, wherein an opening pressure for opening the first non-return valve (708) is less than 1 bar; and/or
a second non-return valve (710) is provided, which allows hydraulic fluid to be drawn by suction by means of the second brake pressure generator (188) out of or via the first functional unit (110), wherein the second non-return valve (710) has a blocking action in the opposite direction; and/or
the piston-type accumulator (702) is formed without an elastic element for automatically moving the piston (704) into its accumulator position; and/or
the second functional unit (120) further comprises a separating piston arrangement (194) between the output of the second brake pressure generator (188) and the corresponding wheel brake (VL) of the subset, wherein additionally to this the separating piston arrangement (194) in particular is designed to fluidically couple the first brake pressure generator (132), during its operation, to the corresponding wheel brake (VL) of the subset and to fluidically decouple the first brake pressure generator (132) from the corresponding wheel brake during operation of the second brake pressure generator (188).

10. Motor vehicle brake system according to one of the preceding claims, wherein
the first functional unit (110) further comprises a first controller (180) for actuating the first brake pressure generator (132) during brake pressure regulation of the first functional unit (110) and the second functional unit (120) further comprises a second controller (180') for actuating the second brake pressure generator (188) during brake pressure regulation of the second functional unit (120); and/or
each first valve arrangement (174, 176) comprises a third valve unit in order to selectively couple the wheel brake (VL) associated with the first valve arrangement (174, 176) to the first brake pressure generator (132) and comprises a fourth valve unit in order to selectively reduce brake pressure at the wheel brake (VL) associated with the second valve arrangement; and/or
the first functional unit (110) further comprises
- a master cylinder (148) which can be coupled to a brake pedal (130); and
- a switchover device (152, 154) in order to selectively couple the first brake pressure generator (132) or the master cylinder (148) to at least one of the wheel brakes (VL, VR, HL, HR) .

11. Motor vehicle brake system according to one of the preceding claims, wherein
the subset of wheel brakes (VL, VR) is exclusively associated with the front wheels of the motor vehicle; and/or
the first brake pressure generator (132) comprises a double-action cylinder/piston arrangement (134) which can be activated by means of an electric motor (140); and/or
the second functional unit (120) is designed in such a way that the second brake pressure generator (188) is able to carry out brake pressure boosting at all wheel brakes of the motor vehicle; and/or
the second brake pressure generator (188) comprises a multiple piston pump, wherein at least one piston (804) of the multiple piston pump (802) is associated with each of the wheel brakes of the subset of wheel brakes, wherein additionally to this the multiple piston pump in particular comprises at least four pistons (804) and the brake system comprises two front wheel brakes (VL, VR) and two rear wheel brakes (HL, HR), wherein at least one piston (804) is associated with each front wheel brake (VL, VR) and each rear wheel brake (HL, HR), wherein furthermore additionally to this the two front wheel brakes (VL, VR) and the two rear wheel brakes (HL, HR) in particular are connected to the second functional unit (120) .

12. Motor vehicle brake system according to one of the preceding claims, wherein
a separate fluid path extending between the first functional unit (110) and the second functional unit (120) is provided for each wheel brake.

13. Method for operating a hydraulic motor vehicle brake system according to one of the preceding claims, wherein the method comprises the following steps:
- sensing a requirement for brake pressure regulation in the case of incorrect functioning of the first functional unit (110);
- carrying out, in response to the sensing, brake pressure regulation by the second functional unit (120) at at least one wheel brake (VL, VR) of the subset; and
- forcing the piston (706) into its accumulator position by means of hydraulic fluid flowing from the rear brake in the direction of the first functional unit (110), until the first non-return valve (708) permits hydraulic fluid to flow out of the cylinder into the first functional unit (110) .

14. Method for testing the second functional unit (120) of the electrohydraulic motor vehicle brake system (100-600) according to one of Claims 1 to 12, comprising the steps of:
hydraulically decoupling the second functional unit (120) from the first functional unit (110);
activating the second pressure generator (188) for boosting a hydraulic pressure at at least one wheel brake (VL, VR) of the subset;
determining one or more of the following parameters: a hydraulic pressure generated at the corresponding wheel brake (VL, VR) and, if the motor vehicle brake system has at least the additional features of Claim 3, a filling level of the unpressurized reservoir (124), associated with the second functional unit (120), for hydraulic fluid;
testing the functioning of the second functional unit (120) on the basis of the at least one determined parameter.

15. Motor vehicle controller (180 or 180') or controller system (180, 180'), wherein the controller or controller system has at least one processor and at least one memory, and wherein the memory comprises program code which, when it is executed by the processor, carries out the steps of the method according to Claim 13 or 14.

## Revendications

1. Système de freinage hydraulique de véhicule automobile à régulation de pression de freinage redondante, comprenant :
une première unité fonctionnelle (110) comportant
- au moins un premier générateur de pression de freinage électrique (132) qui est réalisé pour générer respectivement une pression de freinage au niveau d'une pluralité de freins de roue (VL, VR, HL, HR) ;
- un premier ensemble de soupapes (174, 176) pour chaque frein de roue (VL), le premier ensemble de soupapes (174, 176) pouvant être commandé pour une régulation de pression de freinage au niveau du frein de roue (VL) correspondant, afin d'accoupler un frein de roue (VL) associé au premier ensemble de soupapes (174, 176) sélectivement au premier générateur de pression de freinage (132) ou à un premier réservoir sans pression (122) de fluide hydraulique ; et
une deuxième unité fonctionnelle (120) comportant
- au moins un deuxième générateur de pression de freinage électrique (188) qui est réalisé pour générer respectivement une pression de freinage au niveau d'un sous-ensemble de freins de roue (VL, VR), une sortie du deuxième générateur de pression de freinage (188) étant disposée en aval, vue depuis le premier générateur de pression de freinage (132), du premier ensemble de soupapes (174, 176) associé au frein de roue (VL) correspondant ;
- la deuxième unité fonctionnelle (120) étant conçue pour effectuer, de manière redondante par rapport à la première unité fonctionnelle (110), une régulation de pression de freinage au niveau de chaque frein de roue (VL, VR) du sous-ensemble ;
- **caractérisé en ce que**
la deuxième unité fonctionnelle (120) comprend au moins un accumulateur de fluide (702) prévu du côté de l'entrée du deuxième générateur de pression de freinage (188) ;
- l'accumulateur de fluide étant réalisé sous forme d'accumulateur à piston (702) comportant un cylindre (704) et un piston (706) logé de manière mobile dans celui-ci, le piston (706) présentant une position d'accumulation lorsque le cylindre (704) est rempli et l'accumulateur à piston (702) étant disposé dans une voie de fluide entre l'un des freins de roue du sous-ensemble et la première unité fonctionnelle (110), de telle sorte qu'un fluide hydraulique s'écoulant à partir du frein de roue en direction de la première unité fonctionnelle (110) puisse pousser le piston (706) dans sa position 'accumulation ; et
- une première soupape anti-retour (708) étant prévue entre le cylindre (704) et la première unité fonctionnelle (110), laquelle soupape permet un écoulement de fluide hydraulique à partir du cylindre (704) dans la première unité fonctionnelle (110), la première soupape anti-retour (708) agissant de manière bloquante dans le sens opposé.

2. Système de freinage de véhicule automobile selon la revendication 1,
à la fois une entrée du premier générateur de pression de freinage (132) et une entrée du deuxième générateur de pression de freinage (188) étant accouplées ou pouvant être accouplées au premier réservoir sans pression.

3. Système de freinage de véhicule automobile selon la revendication 1,
la deuxième unité fonctionnelle (120) comprenant un deuxième réservoir sans pression (124) pour du fluide hydraulique et une entrée du deuxième générateur de pression de freinage (188) étant accouplée ou pouvant être accouplée au deuxième réservoir sans pression (124) ; et
une entrée du premier générateur de pression de freinage (132) étant accouplée ou pouvant être accouplée au premier réservoir sans pression (122).

4. Système de freinage de véhicule automobile selon l'une des revendications précédentes,
la deuxième unité fonctionnelle (120) comprenant, pour la mise en œuvre de la régulation de pression de freinage, en outre un deuxième ensemble de soupapes (198) pour chaque frein de roue (VL) du sous-ensemble, le deuxième ensemble de soupapes (198) pouvant être commandé pour la régulation de pression de freinage au niveau du frein de roue (VL) correspondant.

5. Système de freinage de véhicule automobile selon les revendications 3 et 4,
le deuxième ensemble de soupapes (198) étant prévu entre la sortie du deuxième générateur de pression de freinage (188) et le deuxième réservoir sans pression (124).

6. Système de freinage de véhicule automobile selon la revendication 4,
le deuxième ensemble de soupapes comprenant une première unité de soupape (216), afin d'accoupler le frein de roue (VL) associé au deuxième ensemble de soupapes sélectivement au deuxième générateur de pression (188) pour l'augmentation de la pression de freinage, et une deuxième unité de soupape (218), afin de réduire sélectivement la pression de freinage au niveau du frein de roue (VL) associé au deuxième ensemble de soupapes.

7. Système de freinage de véhicule automobile selon la revendication 4,
le deuxième générateur de pression de freinage électrique (188) étant disposé dans une conduite de fluide entre le premier ensemble de soupapes (174, 176) associé à un frein de roue (VL) et le frein de roue (VL) correspondant, de telle sorte que la sortie du deuxième générateur de pression de freinage (188) soit orientée vers le frein de roue (VL) et qu'une entrée ou l'entrée du deuxième générateur de pression de freinage (188) soit orientée vers le premier ensemble de soupapes (174, 176) correspondant, en outre le deuxième ensemble de soupapes associé au frein de roue (VL) correspondant comprenant en particulier une première unité de soupape (302) montée en parallèle avec le deuxième générateur de pression de freinage (188), et en outre le deuxième ensemble de soupapes associé au frein de roue (VL) correspondant comprenant en particulier une deuxième unité de soupape (502) montée en parallèle avec la première unité de soupape (302), et par ailleurs la première et, si elle est présente, la deuxième unité de soupape (302, 502) étant en outre en particulier conçues pour adopter une position de passage lors du fonctionnement du premier générateur de pression de freinage (132) ou pour adopter une position de blocage au moins en sens inverse d'un sens de refoulement du deuxième générateur de pression de freinage (188) lors du fonctionnement du deuxième générateur de pression de freinage (188).

8. Système de freinage de véhicule automobile selon l'une des revendications précédentes,
les freins de roue comprenant des freins de roue avant (VL, VR) et des freins de roue arrière (HL, HR), les freins de roue avant (VL, VR) étant raccordés à la deuxième unité fonctionnelle (120) et les freins de roue arrière (HR, HL) étant raccordés à la première unité fonctionnelle (110).

9. Système de freinage de véhicule automobile selon l'une des revendications précédentes,
la première soupape anti-retour (708) étant sollicitée par une force de ressort, une pression d'ouverture pour l'ouverture de la première soupape anti-retour (708) valant moins de 1 bar ; et/ou
une deuxième soupape anti-retour (710) étant prévue, laquelle permet une aspiration de fluide hydraulique au moyen du deuxième générateur de pression de freinage (188) à partir de la première unité fonctionnelle (110) ou via celle-ci, la deuxième soupape anti-retour (710) agissant de manière bloquante dans le sens opposé ; et/ou l'accumulateur à piston (702) étant formé sans élément élastique pour le transfert automatique du piston (704) dans sa position d'accumulation ; et/ou
la deuxième unité fonctionnelle (120) comprenant en outre un ensemble de piston de séparation (194) entre la sortie du deuxième générateur de pression de freinage (188) et le frein de roue (VL) correspondant du sous-ensemble, en outre l'ensemble de piston de séparation (194) étant en particulier réalisé pour accoupler de manière fluidique le premier générateur de pression de freinage (132), lors de son fonctionnement, au frein de roue (VL) correspondant du sous-ensemble et pour désaccoupler le premier générateur de pression de freinage (132) du frein de roue correspondant lors d'un fonctionnement du deuxième générateur de pression de freinage (188).

10. Système de freinage de véhicule automobile selon l'une des revendications précédentes,
la première unité fonctionnelle (110) comprenant en outre un premier appareil de commande (180) pour la commande du premier générateur de pression de freinage (132) lors d'une régulation de pression de freinage de la première unité fonctionnelle (110) et la deuxième unité fonctionnelle (120) comprenant en outre un deuxième appareil de commande (180') pour la commande du deuxième générateur de pression de freinage (188) lors d'une régulation de pression de freinage de la deuxième unité fonctionnelle (120) ; et/ou
chaque premier ensemble de soupapes (174, 176) comprenant une troisième unité de soupape, afin d'accoupler le frein de roue (VL) associé au premier ensemble de soupapes (174, 176) sélectivement au premier générateur de pression de freinage (132), et une quatrième unité de soupape, afin de réduire sélectivement la pression de freinage au niveau du frein de roue (VL) associé au deuxième ensemble de soupapes ; et/ou
la première unité fonctionnelle (110) comprenant en outre
- un maître-cylindre (148) pouvant être accouplé à une pédale de frein (130) ; et
- un dispositif de commutation (152, 154), afin d'accoupler sélectivement le premier générateur de pression de freinage (132) ou le maître-cylindre (148) à au moins l'un des freins de roue (VL, VR, HL, HR).

11. Système de freinage de véhicule automobile selon l'une des revendications précédentes,
le sous-ensemble de freins de roue (VL, VR) étant associé exclusivement aux roues avant du véhicule automobile ; et/ou
le premier générateur de pression de freinage (132) comprenant un ensemble cylindre-piston à double action (134) pouvant être actionné au moyen d'un moteur électrique (140) ; et/ou
la deuxième unité fonctionnelle (120) étant réalisée de telle sorte que le deuxième générateur de pression de freinage (188) permet de mettre en œuvre une augmentation de pression de freinage au niveau de tous les freins de roue du véhicule automobile ; et/ou
le deuxième générateur de pression de freinage (188) comprenant une pompe à plusieurs pistons, au moins un piston (804) de la pompe à plusieurs pistons (802) étant associé à chacun des freins de roue du sous-ensemble de frein de roue, en outre la pompe à pistons multiples comprenant en particulier au moins quatre pistons (804) et le système de freinage comprenant deux freins de roues avant (VL, VR) et deux freins de roue arrière (HL, HR), au moins un piston (804) étant associé à chaque frein de roue avant (VL, VR) et à chaque frein de roue arrière (HL, HR), par ailleurs les deux freins de roue avant (VL, VR) et les deux freins de roue arrière (HL, HR) étant en outre en particulier raccordés à la deuxième unité fonctionnelle (120).

12. Système de freinage de véhicule automobile selon l'une des revendications précédentes,
une voie de fluide séparée, s'étendant entre la première unité fonctionnelle (110) et la deuxième unité fonctionnelle (120), étant prévue pour chaque frein de roue.

13. Procédé pour faire fonctionner un système de freinage hydraulique de véhicule automobile selon l'une des revendications précédentes, le procédé comprenant les étapes suivantes :
- détection d'un besoin de régulation de pression de freinage en cas de fonctionnement insuffisant de la première unité fonctionnelle (110) ;
- mise en œuvre, lors de la détection, d'une régulation de pression de freinage au moyen de la deuxième unité fonctionnelle (120) au niveau d'au moins un frein de roue (VL, VR) du sous-groupe ; et
- poussée du piston (706) dans sa position d'accumulation au moyen d'un fluide hydraulique s'écoulant à partir du frein de roue en direction de la première unité fonctionnelle (110), jusqu'à ce que la première soupape anti-retour (708) permette un écoulement de fluide hydraulique à partir du cylindre dans la première unité fonctionnelle (110).

14. Procédé pour contrôler la deuxième unité fonctionnelle (120) du système de freinage hydraulique de véhicule automobile (100 - 600) selon l'une des revendications 1 à 12, comprenant les étapes suivantes :
désaccouplement hydraulique de la deuxième unité fonctionnelle (120) de la première unité fonctionnelle (110) ;
actionnement du deuxième générateur de pression (188) pour augmenter une pression hydraulique au niveau d'au moins un frein de roue (VL, VR) du sous-ensemble ;
détermination d'un ou plusieurs des paramètres suivants :
une pression hydraulique générée au niveau du frein de roue (VL, VR) correspondant et, dans le cas où le système de freinage de véhicule automobile présente au moins les caractéristiques supplémentaires de la revendication 3, un état de remplissage du réservoir sans pression (124) de fluide hydraulique, lequel réservoir est associé à la deuxième unité fonctionnelle (120) ;
contrôle du fonctionnement de la deuxième unité fonctionnelle (120) sur la base de l'au moins un paramètre déterminé.

15. Appareil de commande de véhicule automobile (180 ou 180') ou système d'appareil de commande (180, 180'), l'appareil de commande ou le système d'appareil de commande présentant au moins un processeur et au moins une mémoire et la mémoire comprenant un code de programme qui, lorsqu'il est exécuté par le processeur, provoque la mise en œuvre des étapes du procédé selon la revendication 13 ou 14.
